(19) Europäisches Patentamt
European Patent Office
Office européen des brevets

(11) **EP 2 685 696 A1**

(12) **EUROPÄISCHE PATENTANMELDUNG**

(43) Veröffentlichungstag:
**15.01.2014 Patentblatt 2014/03**

(51) Int Cl.:
***H04L 29/06*** *(2006.01)*     *H04L 9/32* *(2006.01)*

(21) Anmeldenummer: **13002987.9**

(22) Anmeldetag: **11.06.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **09.07.2012 AT 2872012**

(71) Anmelder: **Bachmann GmbH**
**6800 Feldkirch (AT)**

(72) Erfinder:
• **Rumpold, Michael**
**6844 Altach (AT)**
• **Fritsche, Josef**
**6714 Nüziders (AT)**

(74) Vertreter: **Riebling, Peter**
**Patentanwalt**
**Postfach 31 60**
**88113 Lindau (DE)**

(54) **Verfahren zum sicheren Betrieb von Verbundnetzen, insbesondere von Windpark- oder anderen ausgedehnten Netzen**

(57) Verfahren zum Betrieb von Verbundnetzen mit mehreren Steuerungseinheiten über größere Distanzen und offener Verkabelung über Standard Netzwerk Infrastruktur, insbesondere von Windpark- oder anderen ausgedehnten Netzen mit einer Datenübertragung gemäß dem OSI-Schichtenmodell (42-48), wobei eine Verschlüsselung und/oder eine Authentifizierung der Daten zwischen Sender und Empfänger im OSI-Schichtenmodell in der Schicht 2 (Layer 2) erfolgt und dass mindestens die Verschlüsselungsschicht (24) innerhalb der Schicht 2 des OSI-Modells angeordnet ist.

Fig. 1

EP 2 685 696 A1

**Beschreibung**

Die Neuerung betrifft ein Verfahren und eine Vorrichtung zum sicheren Betrieb von Verbundnetzen, insbesondere von Windpark- oder anderen ausgedehnten Netzen nach dem Oberbegriff des Schutzanspruches 1.

Ein solches Verbundnetz ist beispielsweise mit der auf den gleichen Anmelder zurückgehenden europäischen Patentanmeldung Nr. 11002613.5 bekannt geworden, die auch als österreichische Voranmeldung veröffentlicht wurde.

Auf den Gegenstand dieser Beschreibung wird Bezug genommen. Diese Beschreibung soll in vollem Umfang von dem Neuerungsinhalt der vorliegenden Beschreibung umfasst sein.

Bei dem Betrieb derartiger Verbundnetze, insbesondere von Windpark- oder anderen ausgedehnten Netzen wird gefordert, dass eine sichere Verbindung zwischen den einzelnen Teilnehmern dieses großen Verbundnetzes vorhanden ist.

Unter dem Begriff "Sicherheit" im Sinne der Neuerung wird verstanden, dass die übermittelten und ausgetauschten Daten und Befehle zwischen den einzelnen Teilnehmern nicht kompromittiert werden können.

Es könnte die Integrität der Daten und Befehle kompromittiert werden, indem z. B. durch eine Fremdeinwirkung von außerhalb des Verbundnetzes die Integrität der übermittelten Daten und Befehle beeinträchtigt wird.

Ebenso könnten von einer externen Instanz fremde Informationen eingeschleust werden, welche das Netz außer Funktion setzen könnten. Ein berühmtes Beispiel ist z. B. die Verseuchung durch einen Virus. Der Virus Stuxnet hat zu schweren Schäden in industriellen Anlagen geführt. Ferner ist wesentlich, dass die Übertragung von Daten und Befehlen vertraulich ist, d. h. das große Verbundnetz soll nicht abgehört oder in anderer Weise Daten nach außen gelangen können.

Die Neuerung beschäftigt sich in einem bevorzugten Ausführungsbeispiel mit einem Verbundnetz, das als Windpark-Verbundnetz ausgebildet ist. Hierauf ist die Neuerung jedoch nicht beschränkt. In einer anderen Ausgestaltung kann ein solches Verbundnetz auch als Marine-Verbundnetz auf einem Wasserfahrzeug, insbesondere einem Schiff oder einem anderen Marinefahrzeug untergebracht sein.

Die Neuerung beschreibt ein Verfahren zur kryptografischen Sicherung der Echtzeitkommunikation zwischen Steuerungen oder anderen Kommunikationsteilnehmern über Netzwerke mit sehr vielen Teilnehmern und hoher Teilnehmerdynamik, wobei der maximale Aufbau des Netzes vorab bekannt ist. Dabei wird eine kryptografische Sicherung (Sicherheit) im Bereich **Integrität** (Veränderung der Datenpakete), **Authentifizierung** (Freund/Feind-Erkennung) und **Vertraulichkeit** (Verschlüsselung der Paketinhalte) bei gleichzeitig geringer Durchsatzeinbuße und Tauglichkeit für industriellen Einsatz beschrieben.

**1 Problemstellung**

In verteilten und über Ethernet vernetzten Systemen mit mehreren Steuerungseinheiten über größere Distanzen und offene Verkabelung, wie es beispielsweise in einem Windpark oder auf einem Schiff üblich ist, ist es oft notwendig, dass die Netzwerkkommunikation den heutigen Bestimmungen der Informationssicherheit (IT-Sicherheit) entspricht. Für die Informationssicherheit gibt es in der IT-Welt seit Jahren die verschiedensten Verfahren und Methoden, die aber für industrielle Echtzeitnetzwerke in der Anlagenwelt mit hoher Teilnehmerdynamik nicht geeignet sind. Als Probleme bei den Methoden aus der bekannten IT-Welt sind die hohe CPU-Last der Verschlüsselung, die ungeeigneten Mechanismen für den Schlüsselaustausch, die teilweise fehlende Dynamik der Teilnehmer, die oft fehlende Möglichkeit Updates einzuspielen und die hohe Anzahl der gleichzeitigen Clients im Kommunikationsverbund zu nennen.

2 Anforderungen aus dem Anlagen-Umfeld

Die Sicherheits-Anforderungen an Kommunikationssysteme unterscheiden prinzipiell nicht zwischen der Office-Welt und den Anforderungen im Anlagen-Umfeld. Jeder Teilnehmer möchte größtmögliche Sicherheit der Anlagen, regelmäßige Updates im Betrieb, geringe Zusatzkosten, geringe Durchsatzeinbußen, wenig Aufwand für Inbetriebnahme und natürlich soll die Produktion keinesfalls unterbrochen werden. Bezüglich eines unterbrechungslosen Betriebs unterscheiden sich allerdings die Anforderungen. Während in der Büro-Welt die Vertraulichkeit und Integrität der Information an oberster Stelle stehen und damit inhärent auch Verzögerungen und Unterbrechungen in der Kommunikation akzeptiert werden, sind die Prioritäten in Industrieanlagen anders. Hier hat der unterbrechungsfreie Betrieb der Anlage höchste Priorität. Das für die Inbetriebnahme zuständige Personal in Industrieanlagen hat ebenfalls andere Anforderungen an die Sicherheits-Komponenten. So sollte die Sicherheit möglichst einfach konfigurierbar sein. Industrieanlagen werden seltener gewartet und sind gleichzeitig einer geringeren Änderungsdynamik als in der IT-Welt unterworfen:

Aus diesem Grund sind sowohl längere Lebenszeiten der Komponenten als auch seltenere Sicherheit-Updates der Anlage akzeptabel und gewünscht. Alle diese Anforderungen führen dazu, dass die Standard-Lösungen der IT nur bedingt für die industrielle Kommunikation der Anlagenwelt geeignet sind. Die Anforderungen aus dem Anlagen-Umfeld im Bereich Sicherheit sind folgende:

● Die Integrität der Datenpakete muss sichergestellt sein. Damit ist gemeint, dass jegliche Veränderung von Datenpaketen (Tampering) erkannt werden muss.

● Eine vollständige Authentifizierung der jeweiligen Gegenstelle muss gewährleistet sein. Es muss sichergestellt sein, dass die empfangenen Datenpakete von einer bekannten und verifizierten Gegenstelle kommen (Freund/Feind). Die Verifikation der Authentifizierung muss auf jedem Datenpaket erfolgen. Ein solches Datenpaket darf nicht durch reines Mithorchen durch Dritte erzeugt werden. Die Authentication Information (HMAC oder dgl.) eines Datenpaketes ist in der Länge frei wählbar und darf sich auch dynamisch ändern.

● Die Vertraulichkeit der Datenpaket-Inhalte muss sichergestellt sein. Damit ist eine ausreichende Verschlüsselung der Daten gemeint, um ein Mithorchen durch Unautorisierte zu verhindern.

● Es darf eine nur geringe Performance Einbuße der Kommunikation durch Verschlüsselung gegeben sein. Eine Performance Einbuße der Datenübertragung um den Faktor 2 ist nur schwer akzeptabel.

● Die verwendeten Techniken müssen dem Stand der Technik und einem bekannten Standard entsprechen (Nachweis der Sicherheit).

● Die verwendeten Benutzerschlüssel (Benutzer-Name, Passwort, Zertifikate, Schlüssel, Gültigkeitsdauer, etc.) müssen online austauschbar sein. Die verwendete Logik für Verschlüsselung oder Berechtigungsprüfung muss ebenfalls austauschbar sei, dabei ist aber ein Reboot der Anlage erlaubt (SW-Update).

● Bei Verwendung von Kommunikationssessions muss davon ausgegangen werden, dass einmal aufgebaute Verbindungen (Sessions) und ausgehandelte Benutzerschlüssel über Jahre bestehen bleiben.

● Die verwendeten Benutzerschlüssel werden nur an der Master-Steuerung (Zentralstelle) ausgetauscht und müssen dann online an jedes Slave-Gerät über einen sicheren Pfad übertragen werden. Ein manueller Schlüsseltausch in jedem Slave-Gerät ist nicht praktikabel. Der Austausch von Benutzerschlüsseln darf zu keinem Betriebsunterbruch führen und muss für alle Kommunikationsteilnehmer gleichzeitig in wenigen Zyklen erfolgen.

## 3 Stand der Technik

Echtzeitnetzwerke für die Kommunikation von Maschinen untereinander, vielfach auch als Feldbusse bezeichnet, werden heutzutage meist ohne Informationssicherheit betrieben. Wenn bei Feldbussen von Sicherheit die Rede ist, ist meist Verfügbarkeit und Ausfallssicherheit gemeint (Safety). In diesem Verfahren wird hingegen der Aspekt Sicherheit gegen absichtliche Angriffe beschrieben (Sicherheit). In den Standards für Feldbusse (IEC 61784 und IEC 61158) ist im Bereich Sicherheit außer rudimentären Ansätzen wenig enthalten. Es zeigt sich, dass die Thematik Sicherheit im Feldbusbereich im industriellen Umfeld und auch in der Gebäudeautomatisierung nahezu ignoriert wird.

Durch die Verwendung von Ethernet basieren Netzwerken und die Ausdehnung von Netzwerken außerhalb von geschützten Bereichen (Sicherheits-Zonen wie Schaltschrank, Einzelgebäude) sind die Anforderungen an solche Netzwerke im Bereich Sicherheit stark gestiegen. Anwender sind vielfach gezwungen, Zusatzgeräte oder Techniken wie VPN-Tunneling, Firewalls etc. zu verwenden, um eine ausreichende Sicherheit zu erreichen. Die Profibus Nutzer Organisation (PNO) beispielsweise empfiehlt in der "PROFINET Sicherheit Guideline" die Bildung von geschützten Zellen mit einer sicheren Kommunikation zwischen den Zellen. Dazu sind ebenfalls Zusatzgeräte notwendig.

Die aus der IT-Welt bekannten Verfahren ohne zusätzliche Hardware setzen üblicherweise auf eine bestehende TCP/IP Schichten auf. Das SSL/TLS-Verfahren (Transport Layer Sicherheit) setzt oberhalb der Transport-Schicht von TCP auf und definiert eigene Ports für sichere Kommunikation. Das SSL/TLS-Verfahren befindet sich im OSI-Modell in Layer 6 in der Darstellungsschicht. Das IPsec-Verfahren arbeitet im Gegensatz zu anderen Verfahren wie etwa TLS/SSL direkt auf der Vermittlungsschicht (Internet Layer, auch als IP-Schicht bekannt) des TCP/IP-Protokolistapels. Die entspricht Layer 3 im OSI-Modell.

Das auf Layer 2 basierende Verfahren nach IEEE 802.1AE, auch bekannt unter dem Namen MACsec, ist ein Hop-by-Hop Verfahren. Dieses Verfahren erfordert, dass jeweils die beiden in den Datentransport beteiligten Teilnehmer (Endgerät zu Switch, Switch zu Switch, Switch zu Endgerät) für die Security auf diesem Teilabschnitt zuständig sind. Ein Punkt zu Punkt oder Punkt zu Multipunkt Szenario (End-to-End) ist so nicht möglich. Dieses Verfahren scheidet daher aus diesem und noch anderen Gründen für industrielle Echtzeitkommunikation aus.

### 3.1 Kryptografische Sicherung

Um die Vertraulichkeit des Nachrichteninhalts sicherzustellen, muss dieser vom Sender verschlüsselt und vom Empfänger wieder entschlüsselt werden. Der Sender nimmt dazu die Nachricht M und führt die Verschlüsselungsfunktion E aus. Durch die Ausführung erhält er den Chiffretext C. Den Text C sendet er dann als Nachricht an den Empfänger. Der Empfänger seinerseits führt die Entschlüsselungsfunktion D aus und erhält so die unverschlüsselte Nachricht. Zur Ver- und Entschlüsselung wird der Schlüssel K verwendet. Der Ablauf lässt sich folgendermaßen mathematisch ausdrücken:

$$E_{KE}(M) = C \quad \text{Verschlüsselung}$$

$$D_{KD}(C) = M \quad \text{Entschlüsselung}$$

Wenn sich der Schlüssel zum Entschlüsseln der Nachricht $K_D$ aus dem Schlüssel zum Verschlüsseln der Nachricht $K_E$ berechnen lässt, spricht man von einem symmetrischen Verfahren. Wird zur Verschlüsselung und zur Entschlüsselung ein anderer Schlüssel verwendet, spricht man von einem asymmetrischen Verfahren. Der Schlüssel zur Verschlüsselung wird dabei als Public Key, der Schlüssel zur Entschlüsselung als Private Key bezeichnet. Die Bezeichnungen kommen daher, dass der Schlüssel zur Verschlüsselung öffentlich bekannt sein darf (jeder dem Empfänger somit verschlüsselte Nachrichten senden kann), der Schlüssel zur Entschlüsselung aber geheim bleiben muss. In dem hier vorgeschlagenen Verfahren wird aus Geschwindigkeitsgründen eine symmetrische Verschlüsselung verwendet.

### 3.2 Schutzziel Authentifizierung

Das Ziel der Sicherung der Authentizität ist die Sicherstellung, dass eine empfangene Nachricht vom erwarteten Sender gesendet wurde und nicht durch einen Dritten, welcher sich als Sender ausgibt, eingeschleust wurde. Dazu gibt es in der IT-Welt die verschiedensten Verfahren, welche nur teilweise für die industrielle Echtzeitkommunikation geeignet sind.

Die Veränderung einer Nachricht sollte durch einen Empfänger feststellbar sein. Um dies zu erreichen wird in meisten Fällen ein so genannter Hashwert an die Nachricht angefügt. Der Hashwert wird mittels einer Einwegfunktion berechnet. Eine Einwegfunktion ist nach Bruce Schneier- "Angewandte Kryptographie" wie folgt definiert:

*"Einwegfunktionen lassen sich relativ einfach berechnen, ihre Umkehrung ist aber erheblich schwieriger. Das heißt, dass* f(x) *zu einem vorgegeben x einfach, x dagegen zu vorgegebenen* f(x) *nur schwer zu berechnen ist. In diesem Zusammenhang bedeutet schwer in etwa, dass x aus* f(x) *selbst dann nur in Millionen von Jahren berechnet werden könnte, wenn alle weltweit verfügbaren Computer auf das Problem angesetzt würden."*

Aus Einwegfunktionen lassen sich Einweg-Hashfunktionen (im Folgenden als Hashfunktionen bezeichnet) konstruieren. Diese Funktionen erhalten als Eingabe Daten variabler Länge und berechnen daraus einen meist kürzeren Ausgabewert. Dieser Wert stellt eine Art Fingerabdruck der Eingabedaten dar aus welchem sich die Eingabedaten nicht wieder rekonstruieren lassen.

Beispiele für Hashfunktionen sind MD5 oder SHA-1. Dadurch, dass die Hashfunktionen meist öffentlich verfügbar sind, könnte ein Angreifer nach der Modifikation der Nachricht den Hashwert der geänderten Nachricht berechnen und anfügen. Die vorgenommene Veränderung bliebe so unbemerkt. Um dies zu verhindern wird die Hashfunktion zum Message Authentication Code (MAC synonym HMAC) erweitert. Dabei wird zusätzlich zu den Eingabedaten ein geheimer Schlüssel (MAC-Key) zur Hashwert Erzeugung benötigt. Dieser Schlüssel muss allen Kommunikationsteilnehmern vorab bekannt sein.

Der MAC Wert über "text" wird folgendermaßen berechnet:

Der Schlüssel K wird zuerst, wenn notwendig, auf die Blockgröße B der Hash Funktion H zum Schlüssel $K_0$ erweitert. Zusammen mit dem Outer Pad (opad) und dem Inner Pad (ipad) wird der MAC Wert als die t höchstwertigen Bytes folgender Funktion berechnet (t bezeichnet die Länge des Ergebnisses):

$$MAC(text)_t = HMAC(K, text)_t = H((K_0 \oplus opad) \| H((K_0 \oplus ipad) \| text))_t$$

Bei den Werten opad und ipad handelt es sich um B Byte lange Konstanten. Für die industrielle Echtzeitkommunikation hat sich zur Erzeugung des Hashwerts der Rijndael Verschlüsselungsalgorithmus als gut geeignet erwiesen.

### 3.2.1 Message Authentication Code (MAC) nach dem Teilvektoren Verfahren

Zur Sicherstellung der Authentizität wird in diesem Verfahren die Verwendung von MAC Funktionen mit Teilvektoren vorgeschlagen. Dabei wird ein Authentifizierungsvektor in n Teilvektoren unterteilt. Die Teilvektoren werden berechnet, in dem auf die zu authentifizierende Nachricht eine MAC Funktion  angewendet wird. Für jeden Teilvektor wird dabei ein anderer Schlüssel verwendet. Dem Sender müssen die Schlüssel aller relevanten Teilvektoren bekannt sein. Den Empfängern wird jeweils eine unterschiedliche Schlüsselteilmenge zugeordnet.

Wird von einem Kommunikationsteilnehmer ein Paket empfangen, so werden von diesem die Teilvektoren berechnet für welche der Teilnehmer die Schlüssel besitzt und mit den Teilvektoren im Authentifizierungsvektor verglichen. Stimmen die berechneten mit den empfangenen Teilvektoren überein, wird das Paket akzeptiert, ansonsten verworfen. Dadurch, dass einem Empfänger nicht alle Schlüssel zur Verfügung stehen, kann durch einen Empfänger kein kompletter gültiger Authentifizierungsvektor für die Gesamtgruppe erzeugt werden. Bei der Kompromittierung eines Empfängers ist dies somit auch dem Angreifer nicht möglich.

Der Vorteil gegenüber anderen Verfahren ist der, dass zur Berechnung des Authentifizierungsvektors keine komplexen Berechnungen notwendig sind.

Bei dem vorgenannten Stand der Technik besteht der Nachteil, dass es bisher nur bekannt war, die Verschlüsselung auf einer sehr hohen Schicht im OSI-Schichtenmodell anzulegen, z. B. auf der Schicht 3 oder 6 im OSI-Modell.

Je höher die Nummer der Schicht im OSI-Modell ist, desto geringer ist die Geschwindigkeit bei der Datenübertragung und bei der Vornahme der Verschlüsselung, was mit einer beträchtlichen Verlangsamung des Datenverkehrs in einem solchen Verbundnetz verbunden ist.

Es ist ferner bekannt, dass man Gruppen von Protokollpaketen, z. B. Ethernet-Protokollpaketen, authentifiziert, was allerdings mit dem Nachteil verbunden ist, dass bei einem Fehler in der Authentifizierung das gesamte Protokollpaket verworfen werden muss, was mit einer starken Verlangsamung des Datenverkehrs verbunden ist.

Der Neuerung hat deshalb die Aufgabe, ein Verfahren zum sicheren Betrieb von Verbundnetzen, insbesondere von Windpark- oder anderen ausgedehnten Netzen und eine Vorrichtung zur Ausübung des Verfahrens so weiterzubilden, dass auch bei einem Verbundnetz mit einer Vielzahl von Teilnehmern, die im Bereich zwischen 500 bis 1000 Teilnehmern liegen können und ein hohes Datenverkehrsaufkommen ein sicherer Betrieb dieses Verbundnetzes gewährleistet ist. Wichtig dabei ist, dass dies über eine Standard Netzwerk Infrastruktur (Verkabelung, Switches, Gateways, Topologie) verwendbar sein muss und keine zusätzliche Hardware für Kryptografie notwendig ist.

Zur Lösung der gestellten Aufgabe ist die Neuerung durch ein Verfahren nach den Merkmalen des Anspruches 1 und durch eine Vorrichtung nach den Merkmalen des unabhängigen Schutzanspruches gekennzeichnet.

### 4 Beschreibung der Neuerung

Bei der Neuerung handelt es sich um ein Verfahren, um die Echtzeitkommunikation in einem Steuerungsverbund mit vielen Teilnehmern über Standard Netzwerk Infrastruktur mit ausreichender Sicherheit in den Bereichen Integrität, Authentifizierung und Vertraulichkeit zu versehen, ohne den Echtzeit-Betrieb und unterbrechungsfreien Betrieb zu stören.

Wesentliches Merkmal der Neuerung ist, dass erfindungsgemäß die Sicherheits-Schichten, d. h. also, dass die Verschlüsselungsschicht und die Authentifizierungsschicht direkt innerhalb der Schicht 2 des OSI-Modells angelegt sind. Die neuerungsgemäße Authentifizierungs- und Verschlüsselungsschicht erweitern die Schicht 2 des OSI-Modells. Kennzeichnend für die Neuerung ist, dass die Schichten 3 bis 6 des OSI-Modells nicht belegt werden und somit durchtunnelt werden.

Damit besteht der wesentliche Vorteil, dass ein Datenverkehr bezüglich des OSI-Modells auf den Schichten 3, 4, 5 und 6 überhaupt vermieden wird, weil diese Schichten durchtunnelt und nicht benutzt werden. Damit ist das erfindungsgemäße Verfahren in seiner Geschwindigkeit bezüglich der Verschlüsselung und Authentifizierung auch bei großen Verbundnetzen allen anderen Verfahren weit überlegen.

Durch das erfindungsgemäße Verfahren ist es gewährleistet, dass gegenüber einer nicht gesicherten Kommunikation, die ebenfalls die Schichten 3-6 des OSI-Modells durchtunnelt, nur eine 50%-ige Geschwindigkeitseinbuße erreicht wird, was mit einem bisher nicht erreichten Vorteil der Geschwindigkeitsverbesserung verbunden ist.

Die vorher bereits schon gegenüber anderen bekannten Verbundnetzen und aus der älteren Patentanmeldung des gleichen Anmelders bekannte Durchtunnelung der Schichten 3-6 des OSI-Modells wird durch die neuerungsgemäße Anlage einer Verschlüsselungs- und einer Authentifizierungsschicht in Schicht 2 des OSI-Modells nur unwesentlich verlangsamt.

**4.1 Verfahren zur Integritätssicherung**

Zur Sicherung der Paketintegrität wird ein Standard MAC Verfahren, wie es im Grundlagenkapitel unter 3.2 beschrieben wurde, verwendet. Der Schlüssel (MAC-Key) für eine Kommunikations-Session wird bei der Konfiguration über einen sicheren Kanal von der Master-Steuerung an die Slave-Geräte übertragen.

**4.2 Verfahren zur Authentifizierung**

In der industriellen Echtzeitkommunikation wird ein Authentifizierungsverfahren benötigt, mit welchem sowohl Multicast- wie auch Unicast Verbindungen authentisiert werden können. Die Verwendung von zwei unterschiedlichen Authentifizierungsverfahren sollte möglichst vermieden werden. In Kapitel 3.2 wurde ein mögliches Authentifizierungsverfahren beschrieben. Um sicherzustellen, dass nach einem vollständigen Zugriff auf ein Slave-Gerät durch einen Angreifer nicht alle Slaves oder andere Kommunikationsteilnehmer  kompromittiert sind, wurde das MAC Verfahren mit folgenden Randbedingungen[1] gewählt.

[1] Die aufgeführten Randbedingungen sind nur als Beispiel zu sehen und sind nicht Bestandteil des Patentanspruchs, andere Randbedingungen sind auch denkbar.

• Authentifizierung des Senders mit einer Fehlerwahrscheinlichkeit von besser $1 : 10^7$ für jedes empfangene Paket
• Fehlerwahrscheinlichkeit der Authentifizierung von besser $1 : 10^6$ wenn ein Slave-Gerät kompromittiert wurde
• Jedes Paket soll alleine anhand der enthaltenen Informationen authentifiziert werden können. Die Authentifizierung von n Paketen nach Empfang des n-ten Pakets ist nicht gewünscht.
• Der Ablauf der Authentifizierung soll für Unicast und Multicast Verbindungen gleich sein.

**4.2.1 Ermittlung der Teilvektorlänge und Anzahl**

Aus den oben definierten Randbedingungen wurde ein Verfahren mit einem Authentifizierungsvektor von 160 Bit Länge[2] als für die industrielle Echtzeitkommunikation als optimal definiert. Der Wert wurde aus der Anforderung der geringen Geschwindigkeitsverringerung (die maximale Nutzdatenlänge für Ethernet Pakete ist mit 1500 Byte definiert) und aus den realen Anwendungsfällen für industrielle Echtzeitkommunikation zur Übertragung kleiner Pakete mit Soll- und Ist-Werten und unter der Annahme von maximal $2^{16}$ Teilnehmern beziehungsweise Endpunkten gewählt. Bei der Zuordnung der Teilvektoren zu den Slaves sollen keine zwei Slaves dieselbe Teilvektormenge erhalten. Diese Anforderung entsteht aus dem Wunsch, dass die Sicherheit der Authentifizierung auch bei Kompromittierung eines Slaves noch erhalten bleibt. Beim Master werden alle Teilvektoren gespeichert. Die Anzahl der zur Erreichung der notwendigen Authentifizierungsvektorlänge pro  Slave benötigten Teilvektoren soll so gering als möglich sein. Diese Anforderung leitet sich aus der Geschwindigkeitsanforderung ab. Je weniger Teilvektoren verwendet werden, umso weniger MAC Berechnungen sind notwendig. Kritisch ist die Anzahl der notwendigen Berechnungen vor allem bei der Authentifizierung der Unicast Verbindungen.

[2] 160 Bit Länge ist nur ein Beispiel und nicht Bestandteil des Patentanspruchs, andere Längen sind auch denkbar.

Folgende Gesichtspunkte müssen bei der Auswahl der Teilvektorlänge berücksichtigt werden: Die Anzahl der verwendeten Teilvektoren soll so gering als möglich sein. Aus den Anforderungen bezüglich der Fehlerwahrscheinlichkeit ergibt sich, dass die Authentifizierungsvektorlänge ohne kompromittierten Empfänger $\geq 24$ Bit sein muss. Bei Kompromittierung eines Empfängers darf die Authentifizierungsvektorlänge nicht unter 20 Bit fallen. Aus der Forderung, dass bei $2^{16}$ Teilnehmern keine zwei Teilnehmer die gleiche Teilvektormenge zur Authentifizierung verwenden dürfen folgt, dass der Binomialkoeffizient $\geq 2^{16}$ sein muss.

Nach obigen Voraussetzungen bezüglich der Authentifizierungsvektorlänge und des Binomialkoeffizient sind 5 Teilvektoren mit jeweils 6 Bit ausreichend und mit fünf notwendigen Berechnungen ist hier auch das Minimum an notwendigen Berechnungen zur Erfüllung der Anforderungen gegeben.

Für die Standard - Einstellung bei industrieller Echtzeitkommunikation wird stattdessen eine Teilvektorlänge von 8 Bit und eine Teilvektoranzahl von 7 vorgeschlagen. Ausschlaggebend hierfür ist, dass durch zwei weitere Berechnungen die Authentifizierungsvektorlänge je Teilnehmer von 30 auf 56 Bit annähernd verdoppelt werden kann und die Adressierung von 8 Bit Teilvektoren in der praktischen Realisierung einfacher ist. Dadurch ergibt sich eine Authentifizierungsvektorlänge von 56 bzw. 32 Bit pro Slave. Bei 20 Teilvektoren im 160 Bit Authentifizierungsvektor ergeben sich 77520 mögliche Teilmengen mit jeweils 7 Elemente. Das ist ausreichend um $2^{16}$ Teilnehmern unterschiedliche Teilvek-tormengen zuzuordnen. Wird für eine Verbindung eine höhere Authentifizierungsvektorlänge benötigt, können dieser Verbindung weitere Teilvektoren zugeordnet werden.

### 4.2.2 Vorbereitung für die Authentifizierung

Bei der Erzeugung werden n (20 bei 8 Bit Teilvektorlänge) Zufallszahlen ausgewählt und gespeichert. Die Zufallszahlen dienen als Schlüssel (AUTH-Key$_x$) zur Berechnung der Werte des Authentifizierungsvektors. Jedem Slave wird eine Teilmenge dieser Schlüssel zugewiesen wobei die Teilmengen so wenig als möglich gleiche Elemente enthalten sollen. Jeder Slave speichert die zugewiesenen Schlüssel (AUTH-Key$_x$) und die dazugehörigen Nummern (x). Zusätzlich sollte auch die Länge der einzelnen Teilvektoren abgespeichert werden. Durch diese Angabe kann beispielsweise die Länge der Teilvektoren bei einer kleinen Kommunikationsgruppe erhöht und so der Berechnungsaufwand verringert werden. Das Protokoll lässt sich dadurch einfach an verschiedene Situationen anpassen. Im Master werden alle Zufallszahlen mit Nummer und die den Slaves zugeteilten Teilmengen gespeichert. Ein erfolgreicher Angriff auf den Master wirkt sich daher verheerend aus. Dies ist aber keine spezielle Schwäche des Protokolls, denn ein erfolgreicher Angriff auf den "Private Key" in einem "Public Key" Kryptosystem wirkt sich ebenso aus.

### 4.2.3 Authentifizierung bei Multicast Verbindungen

Zuerst wird das Paket mit den zu sendenden Nutzdaten erzeugt, der Authentifizierungsvektor mit Null initialisiert und der Nachrichtenhashwert berechnet. Anschließend wird der Authentifizierungsvektor wie folgt erzeugt: Die MAC Funktion wird mit dem ersten Schlüssel (AUTH-Key$_1$) aufgerufen. Der MAC Wert wird nicht über den gesamten Paketinhalt gebildet, sondern lediglich über n mal den Nachrichtenhashwert. Der Wert für n ergibt sich aus der Mindestdatenlänge für die MAC Funktion geteilt durch die Länge des Hashwerts (20 Byte im Beispiel). Der Nachrichtenhashwert wird zur Berechnung herangezogen, da in die Berechnung des Hashwerts sowohl der Nachrichteninhalt wie auch der Zeitstempel als veränderliche Größe eingehen. Würde Beispielsweise nur der Nachrichteninhalt einbezogen würde sich bei identischem Inhalt ein identischer Authentifizierungsvektor ergeben. Wenn der Authentifizierungsvektor lediglich den Zeitstempel berücksichtigen würde, könnte ein Angreifer durch abfangen eines Pakets an einen gültigen Authentifizierungsvektor für einen Zeitstempel gelangen. Diesen Authentifizierungsvektor könnte dann zur Authentifizierung eines eingeschleusten Pakets verwendet werden.

Durch die Ausführung der MAC Funktion auf einer konstanten Datenlänge ergibt sich eine von der Paketgröße unabhängige Berechnungsdauer. Die niederwertigsten Bits des Ergebniswerts werden an der Stelle der Schlüsselnummer multipliziert mit der Teilvektorlänge gespeichert. Anschließend wird die Berechnung mit dem zweiten Schlüssel wiederholt. Dies wird so lange durchgeführt, bis alle in den Teilmengen der Empfänger vorkommenden Schlüssel verwendet wurden. Nach dem Empfang der Nachricht werden zur Überprüfung nacheinander die MAC Werte für die gespeicherten Schlüssel berechnet und der Bit Wert an der Stelle im Authentifizierungsvektor mit den niederwertigsten Ergebnisbits verglichen. Für den Slave sind der Schlüsselanzahl entsprechend viele MAC Berechnungen zur Authentifizierungsprüfung notwendig. Die Reihenfolge der Überprüfung der Teilvektoren sollte so gewählt werden, dass der Teilvektor, welcher zuletzt zur Rückweisung eines Pakets geführt hat, zuerst geprüft wird. Der Grund für diese Empfehlung ist folgender Fall: Ein Angreifer kann den ersten Teilvektor berechnen. Der zweite wird geraten. Dann wird die Nachricht wahrscheinlich beim zweiten Vektor zurückgewiesen. Wenn nun der zweite zuerst geprüft wird, kann eine MAC Berechnung eingespart werden.

### 4.2.4 Authentifizierung bei Unicast Verbindungen

Untersuchungen haben ergeben, dass die für die zyklischen Daten in Abschnitt 2 formulierten Geschwindigkeitsanforderungen zur Authentifizierung von Unicast Paketen durch ein identisches Verfahren wie bei Multicast Paketen nicht erfüllt werden können. Der Grund hierfür ist die Anzahl MAC Berechnungen zur Teilvektorerzeugung. In den Standard Einstellungen sind dafür 7 MAC Berechnungen notwendig. Auch eine Reduktion auf 5 MAC Berechnungen (5 Teilvektoren je 6 Bit) ist nicht ausreichend, um die Anforderungen zu erfüllen. Daher wurde zur Unicast Authentifizierung aus Geschwindigkeitsgründen optional um eine Vereinfachung ergänzt, die nachfolgend beschrieben ist.

Bei einer Unicast Verbindung ist dem Sender wie auch dem Empfänger bekannt welche Schlüsselteilmenge {Key-Slave$_x$} die Gegenstelle besitzt. Zur Authentifizierung ist es daher ausreichend das Wissen um die Schlüssel der Gegenstelle nachzuweisen. Um ein einfaches kopieren zu verhindern, soll dieser Nachweis auch vom Paket abhängen und nicht statisch sein. Daher wird zur Authentifizierung von Unicast Verbindungen folgendes Verfahren eingesetzt: Über die zur Multicast Authentifizierung gespeicherte Schlüsselmenge und dem Nachrichtenhashwert aus dem Sicherungsblock wird der MAC Wert gebildet, Als Schlüssel wird dabei der erste Schlüssel {Key-Slave$_{x1}$} verwendet (alternativ: Schlüsselnummer = (Nachrichtenhashwert Modulo Schlüsselanzahl) + 1).

Der berechnete MAC Wert wird als Authentifizierungsvektor verwendet. Durch die MAC Funktion wird ein Rückschluss vom Ergebnis auf die Schlüssel verhindert. Durch die Hinzunahme des Nachrichtenhashwerts, welcher auch den Zeitstempels enthält, wird erreicht, dass der Authentifizierungsvektor nicht konstant ist. Zur Berechnung des Authentifizierungsvektors wird bei Unicast Verbindungen nur eine MAC Berechnung benötigt. Zudem ergibt sich durch die konstante Datenlänge eine konstante, von der Paketgröße unabhängige, Berechnungsdauer.

### 4.2.5 Sicherheitsbetrachtungen

Die Wahl der Mächtigkeit der Menge der vom Slave überprüften Teilvektoren beeinflusst die erreichbare Sicherheit stark. Wird die Teilmenge zu klein gewählt, steigt die Wahrscheinlichkeit, dass von einem Angreifer zufällig ein vom Slave als gültig akzeptierter Sicherungsvektor erraten wird. Wird die Teilmenge zu groß gewählt, steigt die Überprüfungszeit beim Empfänger und es werden bei einem erfolgreichen Angriff auf einen Slave viele Teilvektoren und damit Bits des Authentifizierungsvektors kompromittiert. Die Prüfung der Authentifizierung durch die Auswertung von 30 Bits ergibt eine Sicherheit von $> 1 : 10^9$. Durch fluten z.B. einer 1 GBit Ethernet Leitung können aber auch in sehr kurzer Zeit sehr hohe Paketanzahlen erreicht werden. Es ist anzuraten, ein Intrusion Detection System (IDS), welches ein Fluten erkennen kann, vorzusehen oder eine Beschränkung auf ein kleines Empfangszeitfenster vorzunehmen. Ein solches IDS kann relativ einfach durch einen passiven Teilnehmer, welchem alle Schlüssel bekannt sind, realisiert werden. Der Teilnehmer hört passiv den Paketstrom mit und überprüft die Teilvektoren der Pakete. Bei Erkennung einer Häufung ungültiger Sicherungsvektoren schlägt das IDS Alarm.

### 4.2.6 Erzeugung und Überprüfung des Authentifizierungsvektors

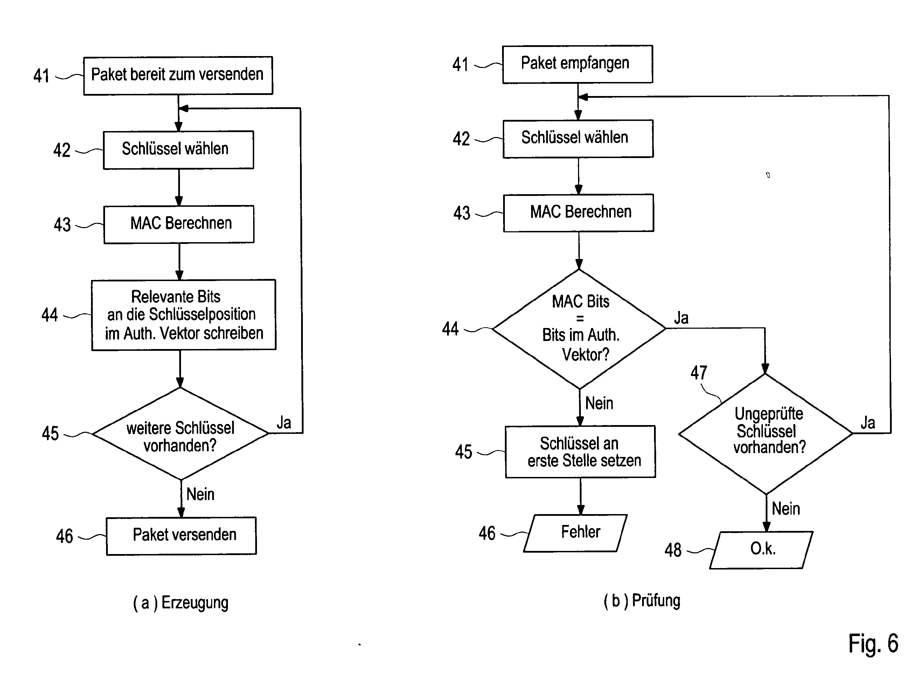

In der Figur 6 ist unter

(a) die Erzeugung des Authentifizierungsvektors für eine Multicast Nachricht und unter
(b) die Überprüfung als Flussdiagramm dargestellt.

Darin sind bei Position 41 die Ein- und Austrittspunkte grau hinterlegt. Wenn das Paket versendet werden soll, werden die MAC - Werte für die verschiedenen Schlüssel (AUTH-Key$_x$) bei Position 43 berechnet und an die entsprechende Stelle im Authentifizierungsvektor geschrieben (42-44). Zur Überprüfung wird für jeden gespeicherten Schlüssel nacheinander der MAC-Wert bei Position 43 berechnet und mit dem entsprechenden Teilvektor im Authentifizierungsvektor verglichen (44). Wenn bei Position 45 kein weiterer Schlüssel vorhanden ist, wird bei Position 46 das Paket versendet.

Wenn ein fehlerhafter Teilvektor gefunden wurde, wird die Schlüsselliste umsortiert (45) um damit zu bewirken, dass dieser Schlüssel bei der folgenden Überprüfung zuerst überprüft wird. Anschließend wird die Überprüfung mit einem Fehler bei Position 46 abgebrochen. Wenn alle Schlüssel erfolgreich überprüft wurden, wird die Überprüfung bei Position 48 mit O.K. beendet.

Nur erfolgreich geprüfte Pakete werden bei Position 46 weiterverarbeitet, die anderen Pakete werden verworfen. Sowohl die Teilvektorerzeugung wie auch die Teilvektorüberprüfung ließen sich sehr einfach parallelisieren. Auf einem Multiprozessorsystem lässt sich damit eine deutliche Beschleunigung erzielen. In den beiden Ablaufdiagrammen ist zu sehen, dass die Performance der Erzeugung sowie der Überprüfung des Authentifizierungsvektors stark von der Laufzeit der MAC Funktion (Schritt 44 beziehungsweise 43) abhängt. Für die reale Implementierung ist es wichtig, eine möglichst performante Funktion zu wählen.

### 4.3 Verfahren zur Sicherung der Vertraulichkeit

Unter Vertraulichkeit ist die Datenverschlüsselung zu verstehen. Aus der IT-Welt sind sehr viele Verschlüsselungsverfahren bekannt. Nur einige Verfahren sind für industrielle Echtzeitkommunikation geeignet.

### 4.3.1 Anforderungen

An die Verschlüsselungsverfahren für industrielle Echtzeitkommunikation werden folgende Anforderungen gestellt (gereiht nach Wichtigkeit):

- Sicherheit: Das Verfahren sollte bereits Reviews unterzogen worden sein und darf dabei keine praktisch relevanten Schwächen aufweisen.
- Geschwindigkeit: Das Verschlüsselungsverfahren muss für Daten mit ein bis 1500 Byte eine sehr schnelle Ver- und Entschlüsselung erlauben.
- Schlüssellänge: Die Verschlüsselung soll mit einem 256 Bit Schlüssel oder alternativ mit einem 128Bit Schlüssel und einem 128 Bit Initialwert möglich sein.
- Skalierung: Die Sicherungslösung muss auch für sehr große Teilnehmerzahlen gut skalieren.
- Für zukünftige Steuerungsgenerationen sollte es möglich sein für das Verschlüsselungsverfahren eine Hardwarebeschleunigung in der CPU einzusetzen.

Diese Anforderungen erfüllen folgende Verschlüsselungsverfahren:

- Sosemanuk: Auf Grund der Performance als Standard Verschlüsselungsverfahren vorgeschlagen
- Rabbit: Wird als Alternative zu Sosemanuk vorgeschlagen
- Rijndael: Der Rijndael Algorithmus wird zur Ausführung des UMAC Verfahrens benötigt. Es entsteht daher kein Mehraufwand wenn er auch zur Datenverschlüsselung angeboten wird. Auch zur Nutzung der Hardware Beschleunigung eventueller späterer Prozessorgenerationen geeignet
- Twofish: Als Alternative zu Rijndael, Implementierung sollte auf dem optimierten Code basieren

**4.4 Verfahren für Schlüsselaustausch**

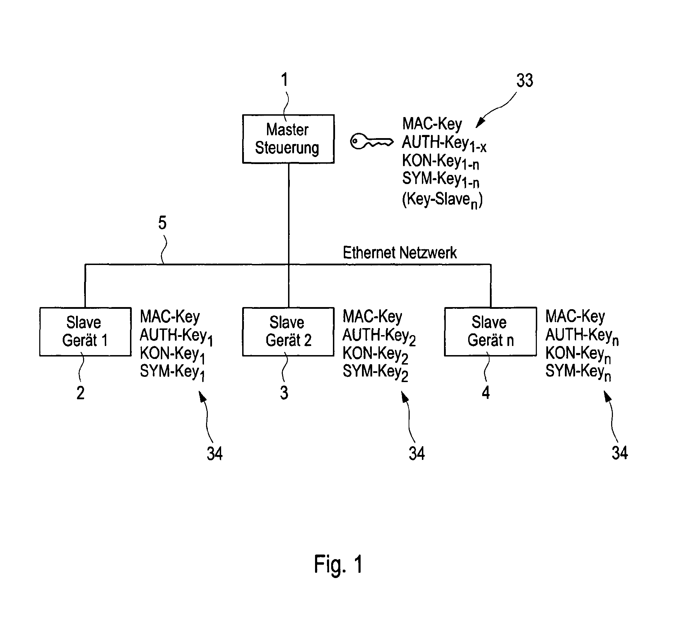

Das Schlüsselaustauschverfahren dient dem Master zur Übermittlung des Schlüssels (SYM-Key), welcher für die symmetrische Verschlüsselung eingesetzt wird, an die Slaves. Siehe dazu Figur 1.

**4.4.1 Anforderungen**

An das Schlüsselaustauschverfahren werden folgende Anforderungen gestellt:

- Mit dem Verfahren sollen die Schlüssel (SYM-Key) für die symmetrische Verschlüsselung sicher an mehrere Teilnehmer verteilt werden können.
- Das Verfahren soll performant auch auf Steuerungen mit geringer Rechenleistung ohne zusätzliche Hardwareunterstützung implementiert werden können.
- Die Anzahl der zur Verteilung notwendigen Nachrichten soll so gering als möglich und die Länge so kurz als möglich sein. Idealerweise ist nur eine Einwegkommunikation notwendig.

**4.4.2 Schlüsselaustausch mit Chinesischem Restsatz**

Das Verfahren basiert auf der Lösung eines Kongruenzsystems, in welchem der symmetrische Schlüssel (SYM-Key) für die Kommunikationsteilnehmer codiert ist. Bei dem Verfahren handelt es sich um ein Pre Shared Key Verfahren, der eigentliche Kommunikationsschlüssel (SYM-Key) wird aus der Lösung eines Kongruenzsystems mit Hilfe von vorab an die Teilnehmer verteiltem Schlüssel (KON-Key) berechnet. Das Verfahren basiert auf der Arbeit *"Chinese Remainder Theorem Based Group Key Management"*, ACMSE, 2007. Um das Verfahren für industrielle Echtzeitkommunikation verwenden zu können, müssen einige Modifikationen vorgenommen werden. Siehe dazu auch Figur 1, wo der Aufbau eines Kommunikationsverbundes dargestellt ist.

Die Schlüssel ($KON\text{-}Key_x$) zur Decodierung der aktuellen Schlüssel (SYM-Key) für die symmetrische Verschlüsselung müssen bei der Initialisierung auf den Slaves gespeichert oder über einen anderen sicheren Kanal verteilt werden. Im Originalverfahren sind für jeden Teilnehmerwechsel relativ aufwendige Berechnungen notwendig. Das Verfahren ist daher zur Verwaltung dynamischer Gruppen nicht geeignet. Für die Verwendung im industriellen Umfeld ist dies nicht von Bedeutung, da im Anwendungsbereich der Anlagensteuerung die Gruppenstruktur bereits zum Konfigurationszeitpunkt bekannt ist und ein Teilnehmerwechsel praktisch nicht vorkommt. Ein "Aussperren" eines Teilnehmers $n$ (wenn z.B. angenommen wird, dass dieser kompromittiert wurde) ist durch Entfernen der Zahl $k_n$ aus dem Kongruenzsystem möglich. Das Kongruenzsystem für dieses Verfahren wird gegenüber dem Originalverfahren folgenderweise definiert:

1. Der Schlüssel muss folgende Bedingung erfüllen: $S_i < k_i$ für alle $1 \leq i \leq n$, damit nach der Subtraktion $k_i - S_i$ immer ein Positiver Rest vorhanden ist.

2. Das Kongruenzsystem wird folgenderweise definiert:

$$X \equiv (k_1 - S_1)(\text{mod } k_1)$$

$$\dots$$

$$X \equiv (k_n - S_n)(\text{mod } k_n)$$

**4.5 Protokollbeschreibung am Beispiel des erfindungsgemäßen Protokolls "bluecom"**

Im folgenden Abschnitt erfolgt die Beschreibung des gesicherten Echtzeitkommunikationsprotokolls auf Basis einer Erweiterung eines bestehenden Echtzeitprotokolls wie es beispielsweise des Bachmann Windpark Protokolls "bluecom" ist. Dazu werden nicht gesicherten Nachrichten erweitert und ein neuer Sicherungsblock eingefügt. Alle Angaben sind nur als Bespiel zu verstehen.

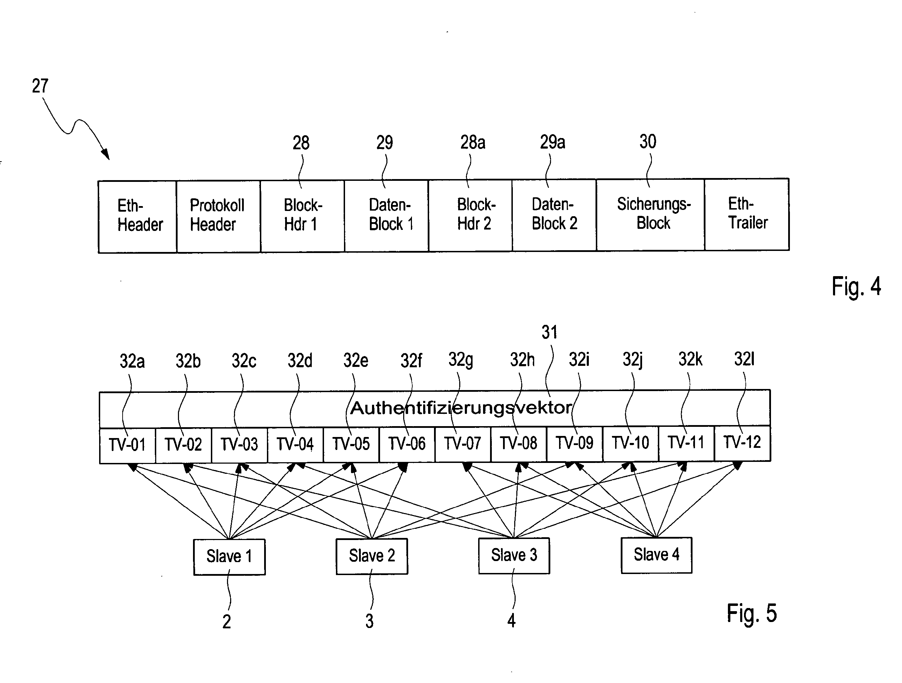

Am Ende des Datenbereichs wird zusätzlich ein optionaler Sicherungsblock (siehe hierzu die Figur 4: Möglicher Aufbau eines Ethernet-Frames mit Protokoll und Sicherungsinformation) eingeführt. Eine ungesicherte bluecom Protokollversion wertet nur die im Protokoll Header angegebene Blockanzahl aus und ignoriert den Sicherungsblock. Die Position des Sicherungsblocks wird im Protokoll Header angegeben.

Im Block-Header (Header für einen Datenblock eines Teilnehmers) müssen zusätzlich enthalten sein:

| | |
|---|---|
| encAlgorithm: | ID für Encryption Algorithmus |
| keyVersCurr: | Versionsnummer des aktuellen Schlüssels |
| keyVersNew: | Versionsnummer des neuen Schlüssels |

In encAlgorithm wird die ID des zur Verschlüsselung verwendeten Algorithmus übertragen. Für die Verschlüsselung können so verschiedene Algorithmen ausgewählt werden. Die Auswahl kann nach Geschwindigkeit, Hardware-Unterstützung, Performance bei Blockdatenlänge etc. erfolgen.

In keyVersNew wird die Neue zur Verschlüsselung mögliche Schlüsselversion angezeigt (SYM-Key). So teilt der Sender dem Empfänger mit, dass ein Schlüsselwechsel notwendig ist. Wenn vom Empfänger der neue Schlüssel berechnet wurde, kann das nächste Paket vom vormaligen Empfänger an den Sender mit der neuen Schlüsselversion verschlüsselt gesendet werden. Die neue Schlüsselversion wird dann in keyVersCurr angezeigt und keyVersNew wird bis zum nächsten möglichen Schlüsselwechsel auf 0 gesetzt.

Die Elemente des neu eingeführten Sicherungsblocks sind wie folgt definiert:

| | |
|---|---|
| headerID: | ID für den Sicherungsblock Header |
| flags: | Bitweise Zusatzinformation |
| timeStamp: | Zeitstempel in ns seit 1970 |
| msgMAC: | 160 Bit MAC-Wert der Nachricht |
| authentication: | 20 Byte Authentifizierungsvektor |

Im Feld headerID: wird für jeden zusätzlichen Header eine eindeutige ID gespeichert. Die ID des Sicherungsblocks ist als 1 definiert. Dies ist notwendig, um das bluecom Protokoll später um weitere Optionale Header erweitern zu können.

In flags wird zusätzliche Authentifizierungsinformationen gespeichert.

Der timeStamp Zeitstempel zeigt an, wann der Sicherungsblock erstellt wurde. Der Zeitstempel wird erst direkt beim Versenden des Pakets erzeugt und nicht wie die Blockzeitstempel beim Eintreffen der Nutzdaten an der API Schnittstelle. In msgHash steht der 160 Bit Hashwert der Nachricht. Der MAC zur Sicherung der Integrität sollte nicht auf der gleichen Hash-Funktion basieren, wie die MAC Funktion zur Berechnung der Authentifizierungsvektoren. Der Grund hierfür ist, dass wenn eine Schwäche in der gemeinsamen Funktion gefunden wird, beide Prüfungen beeinträchtigt sind. Bei der Nutzung unterschiedlicher Funktionen bleibt hingegen eine Prüfung unbeeinträchtigt.

Im Bereich authentication: wird der optionale 20 Byte Authentifizierungsvektor gespeichert.

Die Erfindung zeichnet sich deshalb durch folgende Merkmale aus:

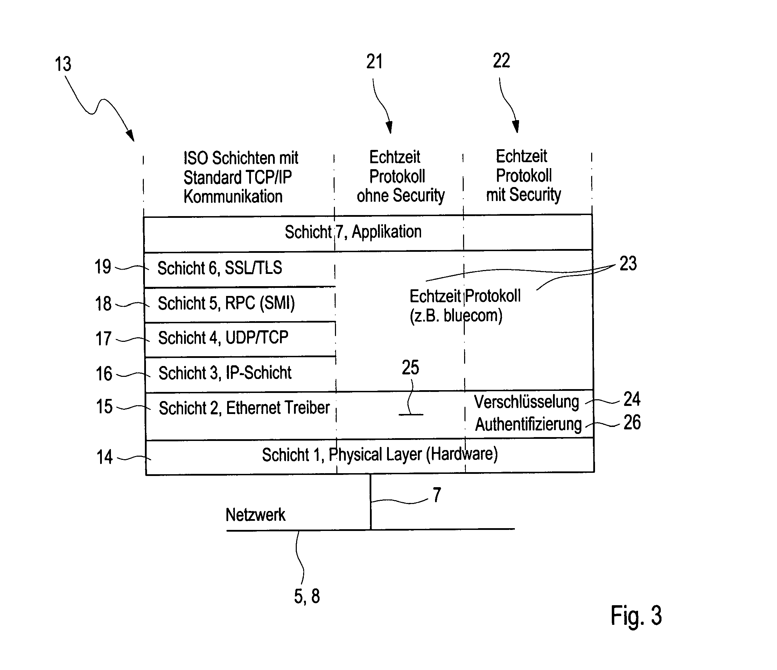

1. Verfahren zur kryptografischen Sicherung von Echtzeitkommunikation in einem Steuerungsverbund mit vielen Teilnehmern über eine dem Stand der Technik entsprechende Sicherheit ohne den Echtzeit-Betrieb und unterbrechungsfreien Betrieb zu stören, wobei die Neuerung dadurch gekennzeichnet ist, dass die gesamte Sicherheit Verarbeitung auf Layer 2 in der OSI Schicht stattfindet. Darüber liegende Schichten sind nicht notwendig oder involviert. Die Ver- und Entschlüsselung und auch die Überprüfung erfolgt somit auf Einzelpaketebene direkt auf Layer 2 und nicht über mehrere gesammelte Pakete auf einem darüber liegenden Layer. Dies ist in Figur 3 dargestellt.

2. Die Neuerung ist dadurch gekennzeichnet, dass die Verarbeitung von vielen Teilnehmern mit unterschiedlichen Schlüsseln (Teilvektoren) erfolgt. Jeder Teilnehmer hat eine andere Teilmenge von Verschlüsselungselementen, damit verwenden keine 2 Teilnehmer dieselbe Gesamtverschlüsselung.

3. Die Neuerung ist dadurch gekennzeichnet, dass die Schlüsselverteilung von einer Zentralstelle aus, der Master-Steuerung, an alle Slave-Geräte automatisch erfolgen kann. Schlüssel müssen somit nur an einer Stelle, der Master-Steuerung, hinterlegt oder geändert werden und verteilen sich dann automatisch auf alle Slave-Geräte oder andere Kommunikationsteilnehmer.

4. Die Neuerung ist dadurch gekennzeichnet, dass eine Auswechslung von Schlüsseln plus die Verschlüsselung und das Verfahren dazu im laufenden Betrieb erfolgen kann (mehrere Schlüssel alt/neu gleichzeitig).

5. Die Neuerung ist dadurch gekennzeichnet, dass die notwendigen Schlüssel optional sowohl in der Master-Steuerung wie auch in allen Slave-Geräten statisch in sicheren Speichermedien hinterlegt werden können. Eine Schlüsselverteilung von einer Zentralstelle aus ist dabei nicht notwendig.

6. Die Neuerung ist dadurch gekennzeichnet, dass die Kommunikationsperformance für die zusätzliche Kryptografie ohne Verwendung von zusätzlicher Hardware auf einer Referenzsteuerung maximal um 50% verringert wird. Als Vergleich gilt die Verzögerungszeit für den Transport von ungesicherten Echtzeitdatenpaketen.

7. Die Neuerung ist dadurch gekennzeichnet, dass die Authentication von Multicast (one to many) und Unicast (one to one) Kommunikation mit ein und derselben Schlüsselmenge gemacht werden kann.

8. Die Neuerung ist dadurch gekennzeichnet, dass die Zuweisung und Anpassung der Sicherungstiefe (Schlüssellänge, Authentication) dynamisch im laufenden Betrieb erfolgen kann.

9. Die Neuerung ist dadurch gekennzeichnet, dass damit ein Aufbau mit einer Master-Steuerung, die mit sehr vielen Slave-Geräten oder anderen Kommunikationsteilnehmern kommuniziert (500 oder mehr), betrieben werden kann.

10. Die Neuerung ist dadurch gekennzeichnet, dass die Auswahl des Verschlüsselungsalgorithmus automatisch durch Abstimmung der Fähigkeiten oder auf Basis der aktuellen Auslastung erfolgt.

11. Die Neuerung ist dadurch gekennzeichnet, dass beliebig Slave-Geräte im laufenden Betrieb zugeschaltet werden können, ohne den Produktivbetrieb zu stören oder die Verschlüsselungssicherheit zu verringern.

12. Die Neuerung ist dadurch gekennzeichnet, dass zur Ver- und Entschlüsselung keine Zusatzhardware benötigt wird, es handelt sich um ein reines Softwareverfahren. Optional kann allerdings Unterstützung von Zusatzhardware verwendet werden.

13. Die Neuerung ist dadurch gekennzeichnet, dass das Verfahren auch für reine Feldbus Geräte ohne Steuerungsfunktion verwendet werden kann.

14. Die Neuerung ist dadurch gekennzeichnet, dass das Verfahren Gateways oder Kaskaden zulässt, bei denen keine Kryptografie notwendig ist. Die Datenpakete werden in solchen Gateways unbearbeitet weitergeleitet und verursachen somit keine Performanceeinbusse.

15. Die Neuerung ist dadurch gekennzeichnet, dass das Verfahren ein einfaches Intrusion Detection System (IDS) unterstützt. Ein IDS ist über einen passiven Teilnehmer, der alle Schlüssel kennt und die gesamte Kommunikation auf ungültige Sicherungsvektoren überwacht, einfach realisierbar. Bei Erkennung einer Häufung ungültiger Sicherungsvektoren schlägt das IDS Alarm.

16. Die Neuerung ist dadurch gekennzeichnet, dass auch nur Teile der Nutzdaten innerhalb eines Layer 2 Paketes verschlüsselt werden können. Es ist also ein Mischbetrieb von gesicherter und ungesicherter Kommunikation möglich.

17. Die Neuerung ist dadurch gekennzeichnet, dass keine spezielle Netzwerk Infrastruktur wie spezielle Verkabelung, Switches oder Gateways notwendig ist. Eine Standard Netzwerk Infrastruktur mit handelsüblichen Geräten ist ausreichend.

**5 Erläuterungen (Glossar)**

| | |
|---|---|
| Master-Steuerung | ist die Steuerung, welche als Zentraleinheit dient. Die Master-Steuerung kontrolliert und bedient alle Slave-Gerate. |
| Master | ist identisch mit Master-Steuerung |
| Slave-Gerät | ist eine Steuerung oder Feldbusteilnehmer, welche mit der Master-Steuerung kommuniziert und dieser unterstellt ist. |
| Slave | ist identisch mit Slave-Gerät |
| MAC | ist eine Abkürzung für Message Authentication Code, siehe dazu Kapitel 3.2.1 |
| AUTH-Key$_x$ | Schlüssel zur Erzeugung der Teilvektoren für den Slave (x) |
| MAC-Key | Paket Message Authentication Code Schlüssel |
| {Key-Slave$_n$} | Menge der Schlüssel von Slave (n) |
| SYM-Key | Schlüssel für die symmetrische Verschlüsselung |
| KON-Key | Ist der Kongruenzschlüssel und dient zur Dekodierung des SYM-Key im übertragenen Kongruenzsystem |
| Multicast | bezeichnet in der Telekommunikation eine Nachrichtenübertragung von einem Punkt zu einer Gruppe (auch Mehrpunktverbindung genannt). In diesem Dokument ist damit auch Broadcast gemeint. |
| Authentifizierungsvektor | ist ein Bytestrom einer vorgegebenen Länge, der als Message Authentication Code dient. |
| Teilvektor | ist ein Teil des Authentifizierungsvektors einer fix vorgegebenen Länge. Ein Authentifizierungsvektor besteht aus n Teilvektoren mit jeweils derselben Länge. |
| Teilnehmerdynamik | damit ist das online Zu- und Wegschalten von Slave-Geräten gemeint. Im Extremfall ist gar kein Slave-Gerät vorhanden. |

Der Neuerungsgegenstand der vorliegenden Neuerung ergibt sich nicht nur aus dem Gegenstand der einzelnen Schutzansprüche, sondern auch aus der Kombination der einzelnen Schutzansprüche untereinander.

Alle in den Unterlagen, einschließlich der Zusammenfassung offenbarten Angaben und Merkmale, insbesondere die in den Zeichnungen dargestellte räumliche Ausbildung, werden als neuerungswesentlich beansprucht, soweit sie einzeln oder in Kombination gegenüber dem Stand der Technik neu sind.

Im Folgenden wird die Neuerung anhand von mehrere Ausführungswege darstellenden Zeichnungen näher erläutert. Hierbei gehen aus den Zeichnungen und ihrer Beschreibung weitere neuerungswesentliche Merkmale und Vorteile der Neuerung hervor.

Es zeigen:

Figur 1: schematisiert dargestellt den Aufbau von einem Kommunikationsverbund

Figur 2: die Topologie eines Neuerungsgemäßen Verbundnetzes am Beispiel eines Windpark-Verbundnetzes

Figur 3: die Gegenüberstellung der Standard-TCP/EP-Schnittstelle am Beispiel des OSI-Schichtenmodells (links) in Gegenüberstellung zu einem unverschlüsselten und einem verschlüsselten Datenübertragungsverfahren nach der Neuerung

Figur 4: der Aufbau eines Ethernet-Frams mit Protokoll und Sicherungsinformationen nach der Neuerung

Figur 5: die mögliche Aufteilung eines Authentifizierungsvektors bei einer Vielzahl von Slaves

Figur 6: schematisiert die Erzeugung und die Überprüfung des Authentifizieru ngsvektors

Die Figur 1 zeigt eine Mastersteuerung 1, die über z. B. ein Ethernet-Netzwerk 5 mit einer Vielzahl von Slave-Geräten 2, 3, 4 verbunden ist.

Wie in der allgemeinen Beschreibung angegeben, können hierbei Slavegeräte 2-4 in einer Anzahl von bis zu 65535 vorhanden sein und der Anschluss an ein Ethernet-Netzwerk ist nur beispielhaft zu verstehen. Es werden sämtliche für die Datenübertragung geeignete Netzwerke 5 beansprucht, z. B. auch Feldbusse, Profibus, Can-Bus, serielle Busse und dergleichen mehr.

In dem Ausführungsbeispiel nach Figur 1 ist auch angegeben, welcher Schlüssel mit der dazugehörenden Schlüsselbezeichnung 33 dem jeweiligen Teilnehmer des Netzwerkes zugeordnet ist. Bei der Mastersteuerung 1 sind z. B. die angegebenen Schlüsselbezeichnungen 33 angesiedelt, während bei den Slave-Geräten 2-4 die weiteren Schlüsselbezeichnungen 34 angesiedelt sind.

Die Mastersteuerung 1 ist demnach über ein Netzwerk 5 mit beliebig vielen Slave-Geräten 2-4 verbunden. In der Master-Steuerung 1 werden alle notwendigen Schlüssel und die Informationen aller Slave-Geräte, wie Teilvektoren, Verschlüsselungsverfahren etc. gespeichert. Zum Startzeitpunkt werden die Schlüssel über eine sichere Kommunikation an die Slaves übertragen. Optional können bestimmte Schlüssel, wie der KON-Key bereits in den Slave-Geräten in einem sicheren Speicher abgelegt sein.

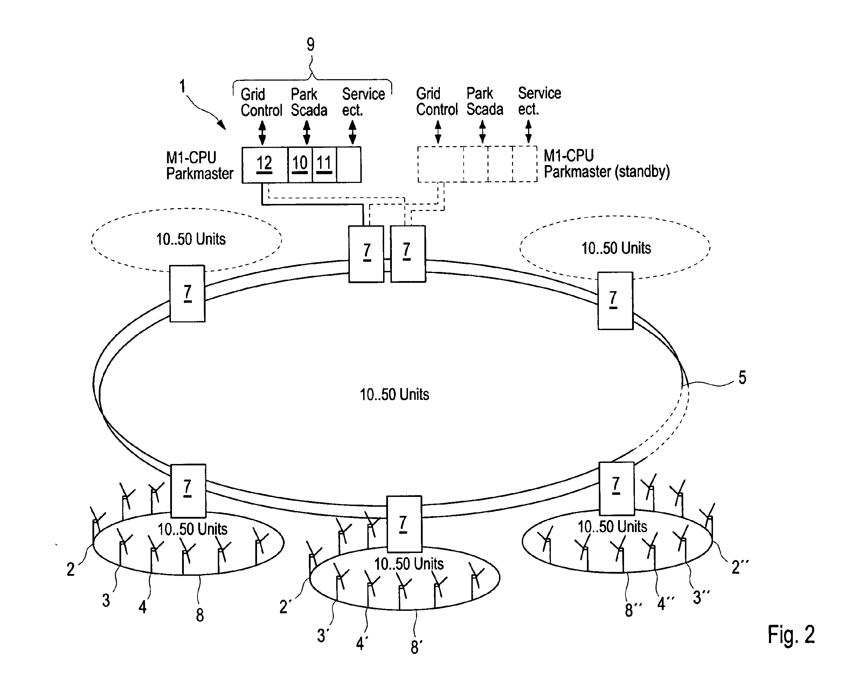

In Figur 2 ist ein ausgewähltes Verbundnetz als Topologie eines Windparks in Gruppen dargestellt, wobei angegeben ist, dass die Mastersteuerung 1 z. B. aus einer CPU 12 besteht, der eine Reihe von IO-Modulen 10, 11 und weitere Steuerungsmodule zugeordnet sind.

Die Steuerungseinheit der Mastersteuerung 1 ist allgemein mit Bezugszeichen 9 versehen.

Die Mastersteuerung 1 hat eine Anbindung an die Außenwelt, z. B. über die Anbindungspfade Grid-Control. Das ist eine Kontrollinstanz für die Kontrolle des Verbundnetzes über den Master. Ferner ist dort ein Ein- und Ausgang für ein Parkscada angelegt. Dies ist ein Park-Monitoring-System, mit dem die Tätigkeit des Verbundnetzes überprüft werden kann.

Ferner sind Serviceanbindungen vorhanden, mit denen bestimmte Serviceleistungen am Verbundnetz geleistet werden können.

Diese Verbindungen sind für Servicetechniker vorgesehen, die sich damit in das gesamte ausgedehnte Verbundnetz einklinken und Wartungsarbeiten vornehmen können.

Die Mastersteuerung ist über das Netzwerk 5 und ein Gateway oder Switch 7 mit einem ausgedehnten weiteren Netzwerk 5 gekoppelt, wobei - wie oben stehend angegeben ist - in der folgenden Beschreibung dieses Netzwerk zwar als Ethernet-Netzwerk beschrieben wird; die Neuerung hierauf jedoch nicht beschränkt ist.

Wichtig ist, dass in dem ausgewählten Verbundnetz des Netzwerkes 5 eine Vielzahl von weiteren Unternetzwerk-Segmenten 8, 8', 8" angelegt sind und jedem Unternetzwerk-Segment 8, 8', 8" eine Vielzahl von Slave-Geräten 2, 2', 2", 3, 3', 3", 4, 4', 4" angelegt sind.

Insgesamt kann dieses ausgedehnte Netzwerk 5 - wie oben angegeben - 500 bis 1000 Slaves beinhalten, die alle in Unternetzwerk-Segmenten 8, 8', 8" aufgeteilt sind.

Jedes Unternetzwerk-Segment 8, 8', 8" kann z. B. 10 bis 50 Slave-Geräte 2-4 beinhalten.

Ein Windpark enthält üblicherweise mehrere - bis zu 500 und mehr - Windkraftanlagen. Die Vernetzung erfolgt typischerweise über einen Ring, der je nach Größe über Sub-Ringe mit einzelnen Gruppen aufgebaut ist. An der Knotenstelle der beiden Ringe ist entweder ein Switch oder eine intelligente Einheit (Gateway oder Kaskade) vorhanden. An der Kopfstation ist ein Park-Master zu finden, welcher den gesamten Windpark steuert und regelt. Optional kann die Vernetzung auch redundant ausgelegt sein.

Zur weiteren Verdeutlichung der erfindungsgemäßen Vorteile bei der Integration der Verschlüsselung und Authentifikation in der OSI-Schicht 2 wird nachfolgend das OSI-Schichtenmodell näher beschrieben:

Als OSI-Schichtenmodell (auch OSI-Referenzmodell; englisch Open Systems Interconnection Reference Model) wird ein Schichtenmodell der Internationalen Organisation für Normung (ISO) bezeichnet. Es wurde als Designgrundlage von Kommunikationsprotokollen entwickelt.

Die Aufgaben der Kommunikation wurden dazu in sieben aufeinander aufbauende Schichten (Layers) unterteilt. Für jede Schicht existiert eine Beschreibung, in welcher steht, was diese zu leisten hat. Diese Anforderungen müssen von den Kommunikationsprotokollen realisiert werden. Die konkrete Umsetzung wird dabei nicht vorgegeben und kann daher sehr unterschiedlich sein. Somit existieren mittlerweile für jede Schicht zahlreiche solcher Protokolle.

Beim OSI-Modell sind es sieben Schichten mit festgelegten Anforderungen. Auf jeder einzelnen Schicht setzt jeweils eine Instanz die Anforderungen um.

Die Instanzen auf Sender- und Empfängerseite müssen nach festgelegten Regeln arbeiten, damit sie sich einig sind, wie die Daten zu verarbeiten sind. Die Festlegung dieser Regeln wird in einem Protokoll beschrieben und bildet eine logische, horizontale Verbindung zwischen zwei Instanzen derselben Schicht.

Jede Instanz stellt Dienste zur Verfügung, die eine direkt darüberliegende Instanz nutzen kann. Zur Erbringung der Dienstleistung bedient sich eine Instanz selbst der Dienste der unmittelbar darunterliegenden Instanz. Der reale Datenfluss erfolgt daher vertikal. Die Instanzen einer Schicht sind genau dann austauschbar, wenn sie sowohl beim Sender als auch beim Empfänger ausgetauscht werden.

Die sieben Ebenen des OSI-Schichtenmodells

Der Abstraktionsgrad der Funktionalität und damit die Komplexität nimmt von Schicht 7 bis Schicht 1 ab. Soweit ein Datenaustausch auf eine der unteren Schichten 1 oder 2 angesiedelt ist, desto höher ist die Geschwindigkeit des Datendurchsatzes.

Schicht 7 - Anwendungsschicht

Die Anwendungsschicht (engl. Application Layer, auch: Verarbeitungsschicht, Anwenderebene) ist die oberste der sieben hierarchischen Schichten. Sie verschafft den Anwendungen Zugriff auf das Netzwerk (zum Beispiel für Datenübertragung, E-Mail, Virtual Terminal, Remote Login etc.). Der eigentliche Anwendungsprozess liegt oberhalb der Schicht und wird nicht vom OSI-Modell erfasst.
Hard-/Software auf dieser Schicht: Gateway, Protokollumwandler, Fax-zu-E-Mail-Dienste
Protokolle und Normen: X.400, X.500, ISO 8571 (FTAM), ISO 9040/9041 (VT), ISO 9506 (MMS), MHS, VTP, FTP, NFS, Telnet, SMTP, HTTP, LDAP, JTM, SSH

Schicht 6 - Darstellungsschicht

Die Darstellungsschicht (engl. Presentation Layer, auch: Datendarstellungsschicht, Datenbereitstellungsebene) setzt die systemabhängige Darstellung der Daten (zum Beispiel ASCII, EBCDIC) in eine unabhängige Form um und ermöglicht somit den syntaktisch korrekten Datenaustausch zwischen unterschiedlichen Systemen. Auch Aufgaben wie die Datenkompression und die Verschlüsselung gehören zur Schicht 6. Die Darstellungsschicht gewährleistet, dass Daten, die von der Anwendungsschicht eines Systems gesendet werden, von der Anwendungsschicht eines anderen Systems gelesen werden können. Falls erforderlich, agiert die Darstellungsschicht als Übersetzer zwischen verschiedenen Datenformaten, indem sie ein für beide Systeme verständliches Datenformat, die ASN.1 (Abstract Syntax Notation One), verwendet.
Protokolle und Normen: ISO 8822 / X.216 (Presentation Service), ISO 8823 / X.226 (Connection-Oriented Presentation Protocol), ISO 9576 (Connectionless Presentation Protocol), SSL/TLS

Schicht 5 - Kommunikationssteuerungsschicht

Die Schicht 5 (engl. Session Layer, Steuerung logischer Verbindungen, auch: Sitzungsschicht) sorgt für die Prozesskommunikation zwischen zwei Systemen. Hier findet sich unter anderem das Protokoll RPC (Remote Procedure Call) um Zusammenbrüche der Sitzung und ähnliche Probleme zu beheben, stellt die Sitzungsschicht Dienste für einen organisierten und synchronisierten Datenaustausch zur Verfügung. Zu diesem Zweck werden Wiederaufsetzpunkte, so genannte Fixpunkte (Check Points) eingeführt, an denen die Sitzung nach einem Ausfall einer Transportverbindung wieder synchronisiert werden kann, ohne dass die Übertragung wieder von vorne beginnen muss.
Protokolle und Normen: ISO 8306 / X.215 (Session Service), ISO 8327 / X.225 (Connection-Oriented Session Protocol), ISO 9548 (Connectionless Session Protocol), RPC (Remote Procedure Call)

Schicht 4 - Transportschicht

Zu den Aufgaben der Transportschicht (engl. Transport Layer, auch: Ende-zu-Ende-Kontrolle, Transport-Kontrolle) zählen die Segmentierung von Datenpaketen und die Stauvermeidung (engl. congestion avoidance). Die Transportschicht bietet den anwendungsorientierten Schichten 5 bis 7 einen einheitlichen Zugriff, so dass diese die Eigenschaften des Kommunikationsnetzes nicht zu berücksichtigen brauchen. Fünf verschiedene Dienstklassen unterschiedlicher Güte sind in Schicht 4 definiert und können von den oberen Schichten benutzt werden, vom einfachsten bis zum komfortabelsten Dienst mit Multiplexmechanismen, Fehlersicherungs- und Fehlerbehebungsverfahren.
Protokolle und Normen: ISO 8073/X.224, ISO 8602, TCP, UDP, SCTP.

Schicht 3 - Vermittlungsschicht

Die Vermittlungsschicht (engl. Network Layer, auch: Paketebene oder Netzwerkschicht) sorgt bei leitungsorientierten Diensten für das Schalten von Verbindungen und bei paketorientierten Diensten für die Weitervermittlung von Datenpaketen. Die Datenübertragung geht in beiden Fällen jeweils über das gesamte Kommunikationsnetz hinweg und schließt die Wegesuche (Routing) zwischen den Netzknoten mit ein. Da nicht immer eine direkte Kommunikation zwischen Absender und Ziel möglich ist, müssen Pakete von Knoten, die auf dem Weg liegen, weitergeleitet werden. Weitervermittelte Pakete gelangen nicht in die höheren Schichten, sondern werden mit einem neuen Zwischenziel versehen und an den nächsten Knoten gesendet.

Zu den wichtigsten Aufgaben der Vermittlungsschicht zählen der Aufbau und die Aktualisierung von Routingtabellen und die Fragmentierung von Datenpaketen. Neben dem Internet Protocol zählen auch die NSAP-Adressen zu dieser Schicht. Da ein Kommunikationsnetz aus mehreren Teilnetzen unterschiedlicher Übertragungsmedien und -protokolle bestehen kann, sind in dieser Schicht auch die Umsetzungsfunktionen angesiedelt, die für eine Weiterleitung zwischen den Teilnetzen notwendig sind.

Hardware auf dieser Schicht: Router, Layer-3-Switch (BRouter)

Protokolle und Normen: X.25, ISO 8208, ISO 8473 (CLNP), ISO 9542 (ESIS), IP, IPsec, ICMP

Schicht 2 - Sicherungsschicht

Aufgabe der Sicherungsschicht (engl. Data Link Layer, auch: Abschnittssicherungsschicht, Datensicherungsschicht, Verbindungssicherungsschicht, Verbindungsebene, Prozedurebene) ist es, eine zuverlässige, das heißt weitgehend fehlerfreie Übertragung zu gewährleisten und den Zugriff auf das Übertragungsmedium zu regeln. Dazu dient das Aufteilen des Bitdatenstromes in Blöcke und das Hinzufügen von Folgenummern und Prüfsummen. Fehlerhafte, verfälschte oder verlorengegangene Blöcke können vom Empfänger durch Quittungs- und Wiederholungsmechanismen erneut angefordert werden. Die Blöcke werden auch als Frames oder Rahmen bezeichnet.

Eine "Datenflusskontrolle" ermöglicht es, dass ein Empfänger dynamisch steuert, mit welcher Geschwindigkeit die Gegenseite Blöcke senden darf. Die internationale Ingenieursorganisation IEEE sah die Notwendigkeit, für lokale Netze auch den konkurrierenden Zugriff auf ein Übertragungsmedium zu regeln, was im OSI-Modell nicht vorgesehen ist.

Nach IEEE ist die Schicht 2 in zwei Unter-Schichten (sub layers) unterteilt: LLC (Logical Link Control) und MAC (Media Access Control).

Erfindungsgemäß erfolgt die Verschlüsselung und/oder Authentication der Daten auf dieser Schicht und zwar bevorzug auf der MAC-Schicht.

Hardware auf dieser Schicht: Bridge, Switch (Multiport-Bridge).

Das Ethernet-Protokoll beschreibt sowohl Schicht 1 als auch Schicht 2, wobei auf dieser als Zugriffskontrolle CSMA/CD zum Einsatz kommt.

Protokolle und Normen, die auf anderen Schicht-2-Protokollen und -Normen aufsetzen: HDLC, SDLC, DDCMP, IEEE 802.2 (LLC), ARP, RARP, STP Protokolle und Normen, die direkt auf Schicht 1 aufsetzen: IEEE 802.11 (WLAN), IEEE 802.4 (Token Bus), IEEE 802.5 (Token Ring), FDDI

Schicht 1 - Physikalische Schicht

Die Bitübertragungsschicht (engl. Physical Layer) ist die unterste Schicht. Diese Schicht stellt mechanische, elektrische und weitere funktionale Hilfsmittel zur Verfügung, um physikalische Verbindungen zu aktivieren bzw. deaktivieren, sie aufrechtzuerhalten und Bits darüber zu übertragen. Das können zum Beispiel elektrische Signale, optische Signale (Lichtleiter, Laser), elektromagnetische Wellen (drahtlose Netze) oder Schall sein. Die für sie verwendeten Verfahren bezeichnet man als übertragungstechnische Verfahren. Geräte und Netzkomponenten, die der Bitübertragungsschicht zugeordnet werden, sind zum Beispiel die Antenne und der Verstärker, Stecker und Buchse für das Netzkabel, der Repeater, der Hub, der Transceiver, das T-Stück und der Abschlusswiderstand (Terminator).

Auf der Bitübertragungsschicht wird die digitale Bitübertragung auf einer leitungsgebundenen oder leitungslosen Übertragungsstrecke bewerkstelligt. Die gemeinsame Nutzung eines Übertragungsmediums kann auf dieser Schicht durch statisches Multiplexen oder dynamisches Multiplexen erfolgen. Dies erfordert neben den Spezifikationen bestimmter Übertragungsmedien (zum Beispiel Kupferkabel, Lichtwellenleiter, Stromnetz) und der Definition von Steckverbindungen noch weitere Elemente. Darüber hinaus muss auf dieser Ebene gelöst werden, auf welche Art und Weise überhaupt ein einzelnes Bit übertragen werden soll.

Damit ist Folgendes gemeint: In Rechnernetzen werden heute Informationen zumeist in Form von Bitfolgen übertragen. Selbstverständlich sind der physikalischen Übertragungsart selbst, zum Beispiel Spannungspulse in einem Kupferkabel im Falle elektrischer Übertragung, oder Frequenzen und Amplituden elektromagnetischer Wellen im Falle von Funkübertragung, die Werte 0 und 1 unbekannt. Für jedes Medium muss daher eine Codierung dieser Werte gefunden werden, beispielsweise ein Spannungsimpuls von bestimmter Höhe oder eine Funkwelle mit bestimmter Frequenz, jeweils bezogen auf eine bestimmte Dauer. Für ein spezifisches Netz müssen diese Aspekte präzise definiert werden. Dies geschieht mit Hilfe der Spezifikation der Bitübertragungsschicht eines Netzes.

Hardware auf dieser Schicht: Modem, Hub, Repeater

Protokolle und Normen: V.24, V.28, X.21, RS 232, RS 422, RS 423, RS 499

Die nach dem OSI-Referenzmodell entwickelten Netzprotokolle haben mit der TCP/IP-Protokollfamilie gemeinsam, dass es sich um hierarchische Modelle handelt. Es gibt aber wesentliche konzeptionelle Unterschiede: OSI legt die Dienste genau fest, die jede Schicht für die nächst höhere zu erbringen hat. TCP/IP hat kein derartig strenges Schichtenkonzept wie OSI. Weder sind die Funktionen der Schichten genau festgelegt noch die Dienste. Es ist erlaubt, dass eine untere Schicht unter Umgehung zwischen liegender Schichten direkt von einer höheren Schicht benutzt wird. TCP/IP ist damit erheblich effizienter als die OSI-Protokolle. Nachteil bei TCP/IP ist, dass es für viele kleine und kleinste Dienste jeweils ein eigenes Netzprotokoll gibt. OSI hat dagegen für seine Protokolle jeweils einen großen Leistungsumfang festgelegt, der sehr viele Optionen hat. Nicht jede kommerziell erhältliche OSI-Software hat den vollen Leistungsumfang implementiert. Daher wurden OSI-Profile definiert, die jeweils nur einen bestimmten Satz von Optionen beinhalten. OSI-Software unterschiedlicher Hersteller arbeitet zusammen, wenn dieselben Profile implementiert sind.

Das OSI-Schichtenmodell ist jedoch nicht ausschließlich der Grund warum TCP/IP für eine Echtzeitübertragung nicht geeignet ist. TCP/IP verwendet nur die unteren 4 Schichten. Es ist vielmehr die Tatsache, dass alle Netzwerk-Stacks, egal ob TCP/IP oder Realtime-Ethernet Protokolle, sehr viel CPU-Leistung bei der in dieser Anwendung geforderten Kommunikation erfordern oder nicht ausreichendes Echtzeitverhalten haben. Ein weiterer Grund für die fehlende Echtzeittauglichkeit von TCP/IP ist die nicht vorhandene Priorisierung der Datenpakete (VLAN Tag) und die damit verbundene Vermischung von langsamer und schneller Kommunikation.

In der Figur 3 ist auf der linken Seite das OSI-Modell dargestellt, wo erkennbar ist, dass die ISO-Schichten über eine Standard-TCP/IP-Kommunikation miteinander kommunizieren.

Die Schicht 6 zeigt hierbei ein nach dem Stand der Technik bekanntes Verschlüsselungsverfahren SSL/TLS, welches in bekannter Weise den Datenaustausch in einem solchen aus 6 Schichten bestehenden Modell außerordentlich langsam gestaltet.

Ferner zeigt die linke Darstellung in Figur 3, dass es auch bekannt ist, in der Schicht 5 ein RPC (SMI)-Protokoll anzulegen, was ebenfalls mit schweren Geschwindigkeitseinbußen verbunden ist.

Ferner zeigt die linke Darstellung in Figur 3, dass es im Übrigen bekannt ist, in der Schicht 4 ebenfalls ein bestimmtes Protokoll anzusiedeln, nämlich das bekannte UDP/TCP-Protokoll, was Neuerungsgemäß gerade vermieden wird.

Die Schicht 3 nach dem OSI-Modell ist die bekannte IP-Schicht und diese wird nach der Neuerung ebenfalls vermieden.

Wichtig ist bei der Neuerung, dass - wie es in der mittleren Darstellung in Figur 3 dargestellt ist, in der älteren Patentanmeldung eine nicht gesicherte Kommunikation 21 beschrieben wurde, die zum Inhalt hat, dass die Schichten 6 bis 3 durchtunnelt werden, was bedeutet, dass auf diesen Schichten kein Datenverkehr stattfindet und daher eine überlegene Geschwindigkeit erreicht wird.

Die Darstellung zeigt auch, dass die aus der älteren Patentanmeldung dargestellte Kommunikation über die nicht gesicherte Kommunikation 21 die Schicht 2 benutzt, auf der die Ethernettreiber angesiedelt sind und ebenfalls die Schicht 1, auf der die Hardware selbst angesiedelt ist.

Die gesamte Datenkommunikation erfolgt über den Gateway oder Switch 7 auf das vorher beschriebene Netzwerk 5 oder das Unternetzwerk-Segment 8.

Wichtig bei der Neuerung ist nun die rechte Darstellung in Figur 3, in der eine Neuerungsgemäße gesicherte Kommunikation dargestellt ist, die in Bezug auf das OSI-Schichtenmodell 13 zeigt, das Neuerungsgemäß auf der Schicht 2 nun eine Verschlüsselungsschicht 24 angesiedelt ist, die im gezeigten Ausführungsbeispiel mit einer Authentifizierungsschicht 26 gekoppelt ist.

Die Neuerung ist nicht auf die Kombination der beiden Schichten angewiesen. In einer anderen Ausgestaltung der Neuerung kann es vorgesehen sein, dass nur die Verschlüsselungsschicht 24 vorhanden ist und die Authentifizierungsschicht 26 entfällt.

In einer weiteren Ausführung der Neuerung kann vorgesehen sein, dass nur die Authentifizierungsschicht 26 vorhanden ist und die Verschlüsselungsschicht 24 entfällt.

Der einfacheren Beschreibung wird jedoch in der folgenden Beschreibung davon ausgegangen, dass die beiden Schichten 24, 26 in Kombination vorhanden sind.

Wichtig hierbei ist, dass die beiden Schichten 24, 26 über den zeichnerisch eingetragenen Anbindungspunkt 25 in der Schicht 2 für den Ethernettreiber angebunden sind.

Hierbei ist wichtig, dass die Programmierung und die Ausführung des Programms für die Ausführung der Verschlüsselungsschicht 24 und/oder der Authentifizierungsschicht 26 im Programmablauf für die Programmierung der Ethernettreiber angelegt ist.

Dass heißt, die beiden Schichten 24, 26 laufen zusammen mit den Ethernettreibern auf der gleichen Programmebene ab, was mit erheblichen Geschwindigkeitsvorteilen verbunden ist. Dies wurde anhand der vorstehenden Liste bereits schon ausführlich erläutert.

Entscheidend für die Neuerung ist also, dass die an sich bekannte nicht gesicherte Kommunikation 21 noch zusätzlich jetzt durch mindestens eine Verschlüsselungsschicht 24 und/oder eine Authentifizierungsschicht 26 ergänzt ist und dass diese beiden oder mindestens eine dieser beiden Schichten 24, 26 auf der Schicht 2 angelegt ist, nämlich auf der Schicht, auf der auch die Ethernettreiber in einer Programmumgebung ablaufen.

Die Figur 3 zeigt, dass sich die Neuerungsgemäßen beiden Schichten 24, 26 in der Schicht 2 (Layer 2 des OSI-Modells) befinden.

Die Authentifizierung und Verschlüsselung erweitert somit die Schicht 2 des OSI-Modells und die Schichten 3 bis 6 des OSI-Modells sind neuerungsgemäß nicht belegt.

So zeigt die Figur 4 ein Protokollpaket für den Aufbau eines Ethernet-Frames nach der Neuerung, bei dem Protokoll und Sicherungsinformationen enthalten sind.

Ein Protokollpaket (üblicherweise ein Ethernet Frame) besteht typischerweise aus den Standard Ethernet-Header und Trailer-Daten, einem Protokoll-Header, einem oder mehreren Datenblöcken samt Header und einem Sicherungsblock. Durch den Sicherungsblock unterscheidet sich eine sichere Kommunikaation nach der Erfindung von einer unsicheren Kommunikation. Im Block-Header wird jeweils definiert, ob und wie der Nutzdatenblock verschlüsselt ist. Ein Mix an verschlüsselten und unverschlüsselten Nutzdatenblöcken ist möglich.

In Figur 4 ist dem gemäß ein Ethernet-Protokoll 27 dargestellt, welches in an sich bekannter Weise einen Protokoll-Header aufweist und einen Ethernet-Trailer, welcher den Beginn und das Ende dieses Protokollpaketes definieren. Wichtig ist nun, dass zwischen diesen beiden Anfangs- und Endblöcken nun abwechselnd jeweils ein Protokollelement 28, 28a und eventuell weitere Protokollelemente eingefügt sind, die jeweils von einem Datenblock abgewechselt werden, so dass hierbei die Nutzdaten 29, 29a übertragen werden.

Entscheidend ist nun, dass ein Sicherungsblock 30 vorhanden ist, der irgendwo im Ablauf dieses Ethernet-Protokollpaketes 27 eingefügt ist.

Welche Elemente der Sicherungsblock enthält, wurde im Abschnitt 4.5 der vorliegenden Beschreibung näher erläutert.

Die Figur 5 zeigt ferner die mögliche Aufteilung eines Authentifizierungsvektors 31 auf unterschiedliche Slaves oder Slavegeräte 2-4.

Der Authentifizierungsvektor 31 wird von der Mastersteuerung 1 erzeugt. Es handelt sich um einen sehr langen Datenblock, der z. B. 160 Bit oder mehr Bit beinhalten kann, was dessen Übertragung und dessen Verschlüsselung und Entschlüsselung schwierig gestaltet.

Um diese Übertragung auch von Bit-langen Vektoren zu ermöglichen, sieht die Neuerung vor, diesen Authentifizierungsvektor 31 aufzuteilen.

Hierbei ist angegeben, dass der Authentifizierungsvektor aus einer Vielzahl von Teilvektoren 32a-32l besteht.

Diese sind in der Zeichnung nach Figur 5 mit dem Begriff TV-01 bis einschließlich TV-12 bezeichnet.

Neuerungsgemäß ist nun vorgesehen, dass z. B. nur jedem Slave 2-4 sechs solcher Teilvektoren zugeteilt werden und dass eben nicht in den Slaves alle Teilvektoren zugeteilt werden, sondern nur einen Teil des gesamten Authentifizierungsvektors.

So sind z. B. dem Slave-Gerät 2 nur die Teilvektoren 32a bis einschließlich 32f zugeteilt, während dem Slave-Gerät 3 die Teilvektoren 32a, 32b, 32c und 32e sowie 32f zugeteilt sind, aber auch noch die Teilvektoren TV-09 und TV-10.

Die Zuteilung von 6 Teilvektoren für jedes Slave-Gerät ist völlig willkürlich. Es können auch mehr oder weniger Teilvektoren zugeteilt werden. Mit der Zuteilung nur einer Untermenge von Teilvektoren 32 aus dem sehr langen Authentifizierungsvektor 31 besteht der Vorteil, dass eine wesentliche Geschwindigkeitserhöhung stattfinden kann, die sich bei der Authentifizierung der Slaves positiv bemerkbar macht. Außerdem wird die Sicherheit erhöht, wenn nämlich ein Slave kompromittiert wird, kann er keinen Authentifizierungsvektor erzeugen, welcher von einem anderen Slave komplett akzeptiert wird, da eben nicht die Gesamtmenge des anderen Slaves bekannt ist.

Hieraus folgt, wenn der eine Slave, z. B. das Slavegerät 2 kompromittiert ist, dass die anderen Slave-Geräte 3-4 weiterarbeiten können, ohne dass es zu einer vollständigen Aushebelung des gesamten Authentifizierungsverkehrs kommt. Das Verfahren wird lediglich geschwächt.

Der gesamte Authentifizierungsvektor (beispielsweise 160 Bits) wird in diesem Beispiel in 12 Teilvektoren (verbleiben 13 Bits je) aufgeteilt. Jedem Slave wir eine andere Teilmenge von Teilvektoren zugewiesen. Bei der Zuweisung muss darauf geachtet werden, dass keine 2 Slaves dieselbe Teilmenge erhalten.

In Figur 6 ist ein Algorythmus zur Überzeugung und Überprüfung des Authentifizierungsvektors dargestellt. Auf der linken Seite (a) ist die Erzeugung des Authentifizierungsvektors dargestellt, während auf der rechten Seite (b) die Überprüfung des Authentifizierungsvektors dargestellt ist.

Die Beschreibung des Ablaufes ist im Abschnitt 4.2.6 der Beschreibung zu finden.

## Zeichnungslegende

| | | | |
|---|---|---|---|
| 1 | Master-Steuerung | 22 | Gesicherte Kommunikation |
| 2 | Slave-Gerät 1, 2', 2" | 23 | Protokollschicht |
| 3 | Slave-Gerät 2, 3', 3" | 24 | Verschlüsselungsschicht |

(fortgesetzt)

| 4 | Slave-Gerät 3, 4', 4" | 25 | Anbindungspunkt |
|---|---|---|---|
| 5 | Netzwerk | 26 | Authentifizierungsschicht |
| 6 | Kommunikationsverbund | 27 | Ethernet-Protokollpaket |
| 7 | Gateway oder Switch | 28 | Protokoll-Elemente 28a |
| 8 | Unternetzwerkseg ment 8', 8" | 29 | Netzdaten 29a |
| | | 30 | Sicherungsblock |
| 9 | Steuerungseinheit | 31 | Authentifizierungsvektor |
| 10 | IO-Modul | | |
| 11 | IO-Modul | 32 | Teilvektor a |
| 12 | CPU | 33 | Schlüsselbezeichnung |
| 13 | OSI-Schichtenmodell | 34 | Schlüsselbezeichnung |
| 14 | Schicht 1 | | |
| 15 | Schicht 2 | | |
| 16 | Schicht 3 | 41 | Position |
| 17 | Schicht 4 | 42 | Position |
| 18 | Schicht 5 | 43 | Position |
| 19 | Schicht 6 | 44 | Position |
| 20 | Netzwerkanschluss | 45 | Position |
| 21 | Nichtgesicherte Kommunikation | 46 | Position |
| | | 47 | Position |
| | | 48 | Position |

**Patentansprüche**

1. Verfahren zum Betrieb von Verbundnetzen mit mehreren Steuerungseinheiten über größere Distanzen und offener Verkabelung über Standard Netzwerk Infratruktur, insbesondere von Windpark- oder anderen ausgedehnten Netzen (5) mit einer Datenübertragung gemäß dem OSI-Schichtenmodell (12), **dadurch gekennzeichnet, dass** eine Verschlüsselung und/oder eine Authentifizierung der Daten zwischen Sender und Empfänger im OSI-Schichtenmodell (12) in der Schicht 2 (Layer 2) erfolgt und dass mindestens die Verschlüsselungsschicht innerhalb der Schicht 2 des OSI-Modells angeordnet ist.

2. Verfahren nach Anspruch 1 **dadurch gekennzeichnet, dass** die Schichten 3 bis 6 des OSI-Schichtenmodells (12) bei der Datenübertragung durchtunnelt sind und nicht belegt sind.

3. Verfahren nach Anspruch 1 oder 2, **dadurch gekennzeichnet, dass** die Verund Entschlüsselung und/oder die Überprüfung der Datenpakete auf einer Einzelpaketebene direkt auf Layer 2 des OSI-Schichtenmodells (12) erfolgt und nicht über mehrere gesammelte Pakete auf einem darüber liegenden Layer.

4. Verfahren nach einem der Ansprüche 1 bis 3, **dadurch gekennzeichnet, dass** die Verarbeitung von vielen Teilnehmern mit unterschiedlichen Schlüsseln (Teilvektoren) erfolgt und dass jeder Teilnehmer eine andere Teilmenge von Verschlüsselungselementen hat, sodass keine 2 Teilnehmer dieselbe Authentifizierung verwenden.

5. Verfahren nach einem der Ansprüche 1 bis 4, **dadurch gekennzeichnet, dass** die Schlüsselverteilung von der Master-Steuerung (1) an alle Slave-Geräte (2-4) automatisch erfolgt und dass Schlüssel somit nur an einer Stelle, der Master-Steuerung (1), hinterlegt oder geändert werden und sich dann automatisch auf alle Slave-Geräte oder andere Kommunikationsteilnehmer verteilen.

6. Verfahren nach einem der Ansprüche 1 bis 5, **dadurch gekennzeichnet, dass** zusätzlich zu den Eingabedaten ein geheimer Schlüssel (MAC-Key) zur Hashwert-Erzeugung verwendet wird und dass dieser Schlüssel allen Kommunikationsteilnehmern vorab bekannt ist.

7. Verfahren nach einem der Ansprüche 1 bis 6, **dadurch gekennzeichnet, dass** zur Sicherstellung der Authentizität der Datenpakete MAC-Funktionen mit Teilvektoren verwenden werden, dass ein Authentifizierungsvektor in n Teilvektoren unterteilt wird und die Teilvektoren berechnet werden, in dem auf die zu authentifizierende Nachricht eine MAC Funktion angewendet wird und dass für jeden Teilvektor ein anderer Schlüssel verwendet wird und dem Sender die Schlüssel aller relevanten Teilvektoren bekannt sind und den Empfängern jeweils eine unterschiedliche Schlüsselteilmenge zugeordnet wird.

8. Vorrichtung zur Ausübung des Verfahren nach einem der Ansprüche 1 bis 7, **dadurch gekennzeichnet, dass** am Ende des Datenbereichs eines Datenpakets ein zusätzlicher Sicherungsblock angefügt ist, dessen Position im Protokoll-Header angegeben ist.

9. Vorrichtung nach Anspruch 8, **dadurch gekennzeichnet, dass** in der als Sicherungsschicht ausgebildeten Schicht 2 (Layer 2) des OSI-Modells eine Verschlüsselungsschicht (24) angesiedelt ist.

10. Vorrichtung nach Anspruch 9, **dadurch gekennzeichnet, dass** die Verschlüsselungsschicht (24) mit einer Authentifizierungsschicht (26) gekoppelt ist.

11. Vorrichtung nach einem oder mehreren der Ansprüche 8 bis 10, **dadurch gekennzeichnet, dass** die Programmierung und die Ausführung des Programms für die Ausführung der Verschlüsselungsschicht (24) und/oder der Authentifizierungsschicht (26) im Programmablauf für die Programmierung der Ethernettreiber angelegt ist.

12. Vorrichtung nach einem oder mehreren der Ansprüche 8 bis 11, **dadurch gekennzeichnet, dass** mindestens die Verschlüsselungsschicht (24) und/oder die Authentifizierungsschicht (26) zusammen mit den Ethernettreibern auf der gleichen Programmebene ablaufen.

1

Master
Steuerung

33

MAC-Key
AUTH-Key$_{1-x}$
KON-Key$_{1-n}$
SYM-Key$_{1-n}$
(Key-Slave$_n$)

5

Ethernet Netzwerk

| Slave Gerät 1 | MAC-Key AUTH-Key$_1$ KON-Key$_1$ SYM-Key$_1$ | Slave Gerät 2 | MAC-Key AUTH-Key$_2$ KON-Key$_2$ SYM-Key$_2$ | Slave Gerät n | MAC-Key AUTH-Key$_n$ KON-Key$_n$ SYM-Key$_n$ |

2

3

4

34

34

34

Fig. 1

Fig. 2

EP 2 685 696 A1

13

21

22

| ISO Schichten mit Standard TCP/IP Kommunikation | Echtzeit Protokoll ohne Security | Echtzeit Protokoll mit Security |
|---|---|---|
| Schicht 7, Applikation | | |
| Schicht 6, SSL/TLS | | |
| Schicht 5, RPC (SMI) | | Echtzeit Protokoll (z.B. bluecom) — 23 |
| Schicht 4, UDP/TCP | | |
| Schicht 3, IP-Schicht | | |
| Schicht 2, Ethernet Treiber | 25 | Verschlüsselung — 24 / Authentifizierung — 26 |
| Schicht 1, Physical Layer (Hardware) | | |

19 — Schicht 6, SSL/TLS
18 — Schicht 5, RPC (SMI)
17 — Schicht 4, UDP/TCP
16 — Schicht 3, IP-Schicht
15 — Schicht 2, Ethernet Treiber
14 — Schicht 1, Physical Layer (Hardware)

Netzwerk

7

5, 8

Fig. 3

EP 2 685 696 A1

27

| Eth-<br>Header | Protokoll<br>Header | Block-<br>Hdr 1 | Daten-<br>Block 1 | Block-<br>Hdr 2 | Daten-<br>Block 2 | Sicherungs-<br>Block | Eth-<br>Trailer |
|---|---|---|---|---|---|---|---|

28  29  28a  29a  30

Fig. 4

31

32a 32b 32c 32d 32e 32f 32g 32h 32i 32j 32k 32l

| | | | | | | | | | | | |
|---|---|---|---|---|---|---|---|---|---|---|---|
| | | | | | Authentifizierungsvektor | | | | | | |
| TV-01 | TV-02 | TV-03 | TV-04 | TV-05 | TV-06 | TV-07 | TV-08 | TV-09 | TV-10 | TV-11 | TV-12 |

| Slave 1 | Slave 2 | Slave 3 | Slave 4 |
|---|---|---|---|

2  3  4

Fig. 5

EP 2 685 696 A1

41 — Paket bereit zum versenden

42 — Schlüssel wählen

43 — MAC Berechnen

44 — Relevante Bits an die Schlüsselposition im Auth. Vektor schreiben

45 — weitere Schlüssel vorhanden?

Ja

Nein

46 — Paket versenden

( a ) Erzeugung

41 — Paket empfangen

42 — Schlüssel wählen

43 — MAC Berechnen

44 — MAC Bits = Bits im Auth. Vektor?

Ja

Nein

45 — Schlüssel an erste Stelle setzen

46 — Fehler

47 — Ungeprüfte Schlüssel vorhanden?

Ja

Nein

48 — O.k.

( b ) Prüfung

Fig. 6

Europäisches
Patentamt

European
Patent Office

Office européen
des brevets

**EUROPÄISCHER RECHERCHENBERICHT**

Nummer der Anmeldung

EP 13 00 2987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/332822 A1 (LIU YONG [US] ET AL) 30. Dezember 2010 (2010-12-30) <br> * Zusammenfassung * <br> * Abbildungen 1,4,5,6B,12D * <br> * Absatz [0005] - Absatz [0007] * <br> * Absatz [0010] * <br> * Absatz [0015] - Absatz [0016] * <br> * Absatz [0018] * <br> * Absatz [0026] - Absatz [0029] * <br> * Absatz [0054] - Absatz [0062] * <br> * Absatz [0086] - Absatz [0108] * <br> * Absatz [0117] * <br> * Absatz [0166] - Absatz [0167] * <br> ----- | 1-12 | INV. <br> H04L29/06 <br><br> ADD. <br> H04L9/32 |
| X | US 2008/095368 A1 (IIDA TAKAMITSU [JP] ET AL) 24. April 2008 (2008-04-24) <br> * Zusammenfassung * <br> * Abbildungen 8,10A,10B,11,12,16, 18,24,26 * <br> * Absatz [0045] * <br> * Absatz [0047] - Absatz [0048] * <br> * Absatz [0050] * <br> * Absatz [0054] * <br> * Absatz [0056] * <br> * Absatz [0062] * <br> * Absatz [0064] * <br> * Absatz [0139] - Absatz [0164] * <br> * Absatz [0175] - Absatz [0191] * <br> * Absatz [0259] - Absatz [0323] * <br> ----- | 1-12 | |
| X | EP 2 086 198 A1 (SIEMENS AG [DE]) 5. August 2009 (2009-08-05) <br> * Zusammenfassung * <br> * Absatz [0001] - Absatz [0007] * <br> * Absatz [0010] - Absatz [0020] * <br> * Absatz [0027] - Absatz [0030] * <br> ----- <br> -/-- | 1-12 | **RECHERCHIERTE SACHGEBIETE (IPC)** <br><br> H04L |

Der vorliegende Recherchenbericht wurde für alle Patentansprüche erstellt

| Recherchenort | Abschlußdatum der Recherche | Prüfer |
|---|---|---|
| München | 16. Oktober 2013 | Kopp, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 13 00 2987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KRAWCZYK IBM M BELLARE UCSD R CANETTI IBM H: "HMAC: Keyed-Hashing for Message Authentication; rfc2104.txt", 19970201, 1. Februar 1997 (1997-02-01), XP015007888, ISSN: 0000-0003 * Zusammenfassung * * Sections 1, 2 * ----- | 1-12 | |
| A | LUDOVIC PIÃTRE-CAMBACÃ CR DÃS ET AL: "Cryptographic Key Management for SCADA Systems-Issues and Perspectives", INFORMATION SECURITY AND ASSURANCE, 2008. ISA 2008. INTERNATIONAL CONFERENCE ON, IEEE, PISCATAWAY, NJ, USA, 24. April 2008 (2008-04-24), Seiten 156-161, XP031248734, ISBN: 978-0-7695-3126-7 * Zusammenfassung * * Section 3 * ----- | 1-12 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 16. Oktober 2013 | Kopp, Klaus |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 13 00 2987

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-10-2013

| Im Recherchenbericht angeführtes Patentdokument | Datum der Veröffentlichung | Mitglied(er) der Patentfamilie | Datum der Veröffentlichung |
|---|---|---|---|
| US 2010332822 A1 | 30-12-2010 | CN 102461329 A<br>EP 2446698 A2<br>JP 2012531817 A<br>KR 20120047915 A<br>US 2010332822 A1<br>WO 2011005567 A2 | 16-05-2012<br>02-05-2012<br>10-12-2012<br>14-05-2012<br>30-12-2010<br>13-01-2011 |
| US 2008095368 A1 | 24-04-2008 | JP 2008104040 A<br>US 2008095368 A1 | 01-05-2008<br>24-04-2008 |
| EP 2086198 A1 | 05-08-2009 | KEINE | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 11002613 A